# EUROPEAN PATENT APPLICATION

(11) **EP 2 226 528 A2**
(43) Date of publication of application: **08.09.2010**
(21) Application number: 10155437.6
(22) Date of filing: 04.03.2010
(51) Int. Cl.: F16F 15/129

(54) **Torque Fluctuation Absorber**

(30) Priority: 05.03.2009 JP 2009052602; 24.02.2010 JP 2010039252
(71) Applicant: Aisin Seiki Kabushiki Kaisha, Kariya-shi, Aichi 448-8650 (JP)
(72) Inventor: Saeki, Tomohiro, Kariya-shi Aichi 448-8650 (JP); Suezaki, Hiroaki, Kariya-shi Aichi 448-8650 (JP); Nakagaito, Satoshi, Kariya-shi Aichi 448-8650 (JP); Miyamoto, Yuki, Kariya-shi Aichi 448-8650 (JP)
(74) Representative: TBK-Patent

(57) **Abstract**

Disclosed is a torque fluctuation absorber comprising: a first plate member 11; a second plate member 14 biased towards the first plate member 11 and rotatable relative to the first plate member 11; and a friction material 16 arranged between the first plate member 11 and the second plate member 14 and pressed on the second plate member 14 slidably along a direction of rotation of the second plate member 14; the friction material 16 engaging with the first plate member 11 to prevent relative movement to the first plate member 11 or to be movable relative to the first plate member 11 within a preset distance but to prevent further movement than the preset distance.

## Description

### CROSS REFERENCE TO RELATED APPLICATIONS

This application is based upon and claims priority under 35 U.S.C. §119 to Japanese patent applications No. 2009-052602, filed on March 5, 2009 and No. 2010-039252, filed on Feb. 24, 2010, the entire content of which is incorporated herein by reference.

### TECHNICAL FIELD

This disclosure relates to a torque fluctuation absorber having a limiter unit that absorbs torque fluctuations between rotational shafts and that produces slip when the fluctuating torque has reached a preset value. More particularly, it relates to a torque fluctuation absorber of low production costs and high performance.

### BACKGROUND DISCUSSION

A torque fluctuation absorber is arranged, e.g., on a power transmission path between an engine and a transmission to absorb or suppress torque fluctuations caused in an engine and in a transmission. The torque fluctuation absorber may include a damper unit that takes up the torque fluctuations by a spring force, a hysteresis unit that takes up or suppresses the torque fluctuations by the hysteresis torque, such as friction, and a limiter unit. The limiter unit produces slip when torsion of the rotational shafts may no longer be taken up by the damper unit or by the hysteresis unit. The limiter unit includes a lining plate interposed between a pressure plate and a cover plate and carrying a friction material secured to each of its major surfaces. A conical spring is interposed between a support plate and the pressure plate. The pressure plate, biased by the conical spring, thrusts the lining plate towards the cover plate, whereby the friction material is slidably pressed on both the pressure plate and the cover plate.

The friction material, secured to each of the major surfaces of the lining plate, is routinely caulked by rivets to the lining plate. However, Patent Document 1 discloses a configuration in which the friction material is bonded to the lining plate with an adhesive, or a configuration in which the two are molded together using a through-hole(s) bored in the lining plate.

### [Patent Document]

[Patent Document 1] JP 2005-127507A

The entire disclosure of the above-mentioned Patent Document I is incorporated herein by reference thereto. The following analysis is made by the present invention.

In the limiter unit of the conventional torque fluctuation absorber, in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole bored in the lining plate, the adhesive may not be evenly pervaded in the through-hole, thus again raising the problem in connection with strength of the friction material.

It is therefore a principal object of this disclosure to provide a torque fluctuation absorber with which it is possible to lower the cost as the problem connected with the insufficient strength of the friction material is avoided.

### SUMMARY

According to an aspect of this disclosure a torque fluctuation absorber includes a first plate member, a second plate member biased towards the first plate member and rotatable relative to the first plate member, and a friction material arranged between the first and second plate members and pressed on the second plate member slidably along a direction of rotation of the second plate member. The friction material is engaged with the first plate member to prevent relative movement to the first plate member or to be movable relative to the first plate member a preset distance but to prevent further movement beyond the preset distance.

According to another aspect of this disclosure, a torque fluctuation absorber includes a first plate member, a second plate member biased towards the first plate member and being rotatable relative to the first plate member, and a friction material arranged the first and second plate members and pressed on the first plate member slidably along a direction of the second plate member. The friction material engages with the second plate member to prevent relative movement therebetween.

### BRIEF DESCRIPTION OF THE DRAWINGS

The foregoing and additional features and characteristics of this disclosure will become more apparent from the following detailed description with the reference to the accompanying drawings, wherein:
Fig.1 is a radial partial cross-sectional view schematically showing the configuration of a torque fluctuation absorber according to Example 1 disclosed here;
Fig.2 is a radial partial cross-sectional view schematically showing the configuration of a limiter unit of a torque fluctuation absorber according to Example 2;
Figs.3A and 3B are a radial partial cross-sectional view and a circumferential partial cross-sectional view along line X-X' of Fig.3A, respectively, schematically showing the configuration of a limiter unit of a torque fluctuation absorber according to Example 3;
Figs.4A and 4B are a partial cross-sectional view, parallel to a planar plane, and a cross-sectional view taken along line Y-Y', respectively, schematically showing the configuration of the combination of a friction material and a lining plate of the torque fluctuation absorber according to Example 4;
Fig.5 is a radial partial cross-sectional view schematically showing the configuration of a limiter unit of a torque fluctuation absorber according to Example 5;
Fig.6 is a radial partial cross-sectional view schematically showing the configuration of a torque fluctuation absorber according to Example 6;
Fig.7 is a radial partial cross-sectional view schematically showing the configuration of a limiter unit of a torque fluctuation absorber according to Example 7;
Fig.8 is a radial partial cross-sectional view schematically showing the configuration of a limiter unit of a torque fluctuation absorber in the vicinity of a slide surface according to Example 8;
Fig.9 is a radial partial cross-sectional view schematically showing the configuration of a limiter unit of a torque fluctuation absorber in the vicinity of a slide surface according to Example 9;
Fig.10 is a radial partial cross-sectional view schematically showing the configuration of a portion of a limiter unit of a torque fluctuation absorber according to Example 10;
Fig.11 is a radial partial cross-sectional view schematically showing the configuration of a portion of a limiter unit of a torque fluctuation absorber according to Example 11;
Fig.12 is a radial partial cross-sectional view schematically showing the configuration of a limiter unit of a torque fluctuation absorber according to Example 12;
Fig.13 is a radial partial cross-sectional view schematically showing the configuration of a limiter unit of a torque fluctuation absorber according to Example 13;
Fig.14 is a radial partial cross-sectional view schematically showing the configuration of a limiter unit of a torque fluctuation absorber according to Example 14;
Fig.15 is a radial partial cross-sectional view schematically showing the configuration of a limiter unit of a torque fluctuation absorber according to Example 15;
Figs.16A and 16B are a radial partial cross-sectional view and a partial cross-sectional view of a friction material, respectively, schematically showing the configuration of a limiter unit of a torque fluctuation absorber according to Example 16;
Figs.17A and 17B are partial plan views schematically showing the configuration of a limiter unit of a torque fluctuation absorber according to a first instance and a second instance of Example 17, respectively,;
Figs.18A to 18C are partial plan views schematically showing the configuration of a limiter unit of a torque fluctuation absorber according to a first instance, a second instance and a third instance of Example 18, respectively,; and
Figs.19A, Figs.19B depict partial plan/ partial cross-sectional views, schematically showing the structure of an extended portion of a plate of a limiter unit of the torque fluctuation absorber according to a first instance and a fourth instance of Example 18.

### DETAILED DESCRIPTION

### First Embodiment

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a first aspect of this disclosure a torque fluctuation absorber includes a first plate member; a second plate member biased towards the first plate member and rotatable relative to the first plate member; a friction material arranged between the first and second plate members and pressed on the second plate member slidably along a direction of rotation of the second plate member; and a guide part that prevents the friction material from movement away from the rotation center of the second plate member between the first plate member and the second plate member .

According to a second aspect, in the torque fluctuation absorber according to the first aspect, preferably the first plate member includes the guide unit.

According to a third aspect, it is preferred that the torque fluctuation absorber according to the first aspect preferably includes; a support member rotating in unison with the first plate member; a third plate member disposed between the second plate member and the support member; a resilient member that is disposed between the support member and the third plate member and biases the third plate member toward the second plate member; another friction member that is disposed between the second plate member and the third plate member and is slidably pressed on the second and third plate members along a rotation direction of the second plate member; and another guide part that prevents the other friction member from movement away from the rotation center of the second plate member between the second and third plate members.

According to a fourth aspect, in the torque fluctuation absorber according to the third aspect, preferably, the second plate member or the third plate member has the other guide part.

According to a fifth aspect, in the torque fluctuation absorber according to the first aspect, preferably, a material less prone to rusting than iron, a surface processed material or a thermally processed material is used for forming at least one out of the first plate member and the second plate member.

According to a sixth aspect, in the torque fluctuation absorber according to the fifth aspect, preferably, stainless steel is used for forming at least one out of the first plate member and the second plate member. The surface of at least one plate member in contact with the friction material is processed with roughing, preferably.

According to a seventh aspect in the torque fluctuation absorber according to the third aspect, preferably, a material less prone to rusting than iron, a surface processed material or a thermally processed material is used for forming the third plate member.

According to a eighth aspect, in the torque fluctuation absorber according to the seventh aspect, preferably, stainless steel is used for forming the third plate member, and a surface of the third plate member in contact with the other friction material is processed with roughing.

According to a ninth aspect, in the torque fluctuation absorber according to the first aspect, preferably, the friction material is annular in shape, and the guide part prevents the friction material from radially outward movement.

According to a tenth aspect, in the torque fluctuation absorber according to the third aspect, preferably, the other friction material is formed annularly, and the other guide part prevents the other friction material from radially outward movement.

Based on the above formation, redial off-set of the friction material(s) is suppressed, which obviates the need of the securing to the other member by way of bonding, reduces the cost, and can retain the strength of the friction material.

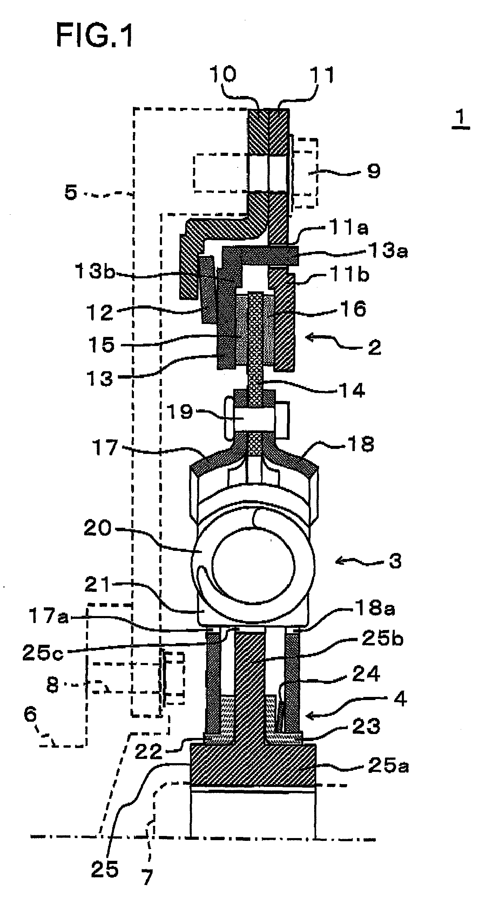

An embodiment (Example 1) of the torque fluctuation absorber according to the first to tenth aspects will now be described with reference to the drawings. Fig.1 depicts a radial partial cross-sectional view schematically showing the structure of a torque fluctuation absorber according to Example 1.

A torque fluctuation absorber 1 according to Example 1 is provided e.g. on a power transmission path between an engine side rotational shaft 6 and a transmission side rotational shaft 7. It is a device for absorbing (suppressing) torque fluctuations caused by torsion between the engine side rotational shaft 6 and the transmission side rotational shaft 7. The torque fluctuation absorber 1 includes a damper unit 3 having a torsion buffering function and configured for absorbing the fluctuating torque by spring force, and a hysteresis unit 4 that absorbs (suppresses) the fluctuating torque by a hysteresis torque caused e.g. by friction. The torque fluctuation absorber 1 also includes a limiter unit 2 that produces slip when the torsion of the rotational shaft has ceased to be absorbed by the damper unit 3 or by the hysteresis unit 4. The limiter unit 2 is arranged on the power transmission path in series with the damper unit 3 and the hysteresis unit 4. The damper unit 3 is arranged on the power transmission path in parallel with the hysteresis unit 4. The torque fluctuation absorber 1 may be used in particular for a hybrid car having no limiter unit in the car, and may also be useful for reducing the system size in a car not having the limiter unit.

The torque fluctuation absorber 1 includes, as component parts, a support plate 10, a cover plate 11, a conical spring 12, a pressure plate 13, a lining plate 14, friction materials 15, 16, a first side plate 17, a second lining side plate 18, a rivet 19, a coil spring 20, a seat member 21, a first thrust member 22, a second thrust member 23, a conical spring 24 and a hub member 25.

The support plate 10 is an annular member arranged between a flywheel 5 and the cover plate 11 and is a component part of the limiter unit 2. The support plate 10 is set at its periphery on the cover plate 11 and the two plates are secured to the flywheel 5 by a bolt 9. The support plate 10 rotates in unison with the cover plate 11. The support plate 10 is separated at its inner peripheral part away from the cover plate 11, and is pressure contacted with the conical spring 12. Meanwhile, the flywheel 5 is secured by a bolt 8 to the engine side rotational shaft 6.

The cover plate 11 is an annular member arranged on the opposite side of the flywheel 5 with respect to the support plate 10 (on the right side of Fig.1), and is a component part of the limiter unit 2. The cover plate 11 is set at its periphery in contact with the support plate 10 and the two plates are secured to the flywheel 5 by the bolt 9. The cover plate 11 is separated at its inner peripheral part away from the support plate 10. The cover plate 11 includes a hole 11a for supporting the pressure plate 13 in such a manner as to inhibit relative rotation and to allow for axial movement of the pressure plate 13. A protrusion 13a of the pressure plate 13 is introduced through this hole 11a so that the pressure plate may not perform relative rotation but may perform axial movement. The cover plate 11 has an inner peripheral slide surface by which the cover plate 11 is pressed on the friction material 16 as the sliding movement of the cover plate 11 is allowed. The cover plate 11 includes a guide part 11b on an outer peripheral side of the friction material 16. The guide part 11b guides the friction material 16 in such a manner as to suppress the offsetting (excursion in the radial direction) of the friction material 16. The guide part 11b prevents the movement of the friction material 16 in a direction away from the center of rotation of the lining plate 14. The guide part 11b is formed as a step having a portion bent substantially at right angles to the radial direction of the friction material 16. The inner peripheral surface of the step of the guide part 11b guides the outer peripheral surface of the friction material 16. The guide part 11b may be formed by press working. To prevent affixture of the cover plate 11 to the friction material 16 due to rusting, the guide part 11b is preferably formed of a material less susceptible to rusting than iron, such as stainless steel. Moreover, to assure a sufficient value of the frictional coefficient µ, the cover plate is preferably surface-processed, such as with plating, or thermally processed. The reason the cover plate is surface-processed or thermally processed is that stainless steel, for example, tends to exhibit a low value of the frictional coefficient µ until sufficient frictional force is developed. Preferably, the surface of the cover plate 11 contacting with the friction material 16 is subjected to roughening processing (acid wash, shot peening, burr-formation or the like).

The conical spring 12 is an annular member arranged between the support plate 10 and the pressure plate 13 (lining plate 14), and is a component part of the limiter unit 2. The conical spring 12 biases the lining plate 14 toward the cover plate 11 by means of the pressure plate 13 and the friction material 15.

The pressure plate 13 is an annular member arranged between the conical spring 12 and the friction material 15, and is a component part of the limiter unit 2. The pressure plate 13 includes a protrusion 13a operative to prevent relative rotation of the pressure plate 13 relative to the cover plate 11 and to allow for axial movement of the pressure plate 13. The protrusion 13a is fitted into the hole 11a of the cover plate 11 so that the protrusion 13a may not perform relative rotation but may perform axial movement. The pressure plate 13 is biased towards the friction material 15 by the conical spring 12 and is slidably pressure contacted by a slide surface against the friction material 15. The pressure plate 13 includes a guide part 13b on an outer peripheral side of the friction material 15. The guide part guides the friction material 15 in such a manner as to suppress the center-offsetting (excursion in the radial direction) of the friction material 15. The guide part 13b prevents the movement of the friction material 15 in a direction away from the center of rotation of the lining plate 14. The guide part 13b is formed as a step having a portion bent substantially at right angles to the radial direction of the friction material 15. The inner peripheral surface of the step of the guide part 13b guides the outer peripheral surface of the friction material 15. The guide part 13b may be formed by press working. To prevent affixture of the pressure plate 13 to the friction material 16 due to rusting, the pressure plate is preferably formed of a material insusceptible to rusting, such as stainless steel. Moreover, to provide for a sufficient value of the frictional coefficient µ, the pressure plate is preferably surface-processed, such as with plating, or is thermally processed. Preferably, the surface of the pressure plate 13 contacting with the friction material 15 is subjected to roughening processing (acid wash, shot peening, burr-formation or the like).

The lining pate 14 is an annular member arranged between the friction materials 15, 16, which in turn are arranged between the cover plate 11 and the pressure plate 13. The lining plate 14 is a component part of the limiter unit 2. An inner peripheral part of the lining pate 14 is sandwiched between the first side plate 17 and the second side plate 18, and is secured to the first side plate 17 and to the second side plate 18 by rivet 19. An outer peripheral part of the lining plate 14 is placed between the friction materials 15, 16 and is in pressure contact therewith as the sliding movement of the lining plate 14 is allowed. To prevent affixture of the lining plate 14 to the friction materials 15, 16 due to rusting, the lining plate 14 is preferably formed of a material insusceptible to rusting, such as stainless steel. Moreover, to provide for a sufficient value of the frictional coefficient µ, the cover plate is preferably surface-processed, such as with plating, or thermally processed. Preferably, the surface of the lining plate 14 contacting with the friction materials 15, 16 is subjected to roughening processing (acid wash, shot peening, burr-formation or the like).

The friction material 15 is a component part of the limiter unit 2, and is arranged between the lining plate 14 and the pressure plate 13. The friction material 15, which is an annular member, is not secured to the lining plate 14 or to the pressure plate 13. The friction material 15 is slidably pressed on the lining plate 14 and the pressure plate 13. The friction material 15 used may include rubber, resins, fibers (short fibers or long fibers) or particles for adjustment of the frictional coefficient µ.

The friction material 16 is a component part of the limiter unit 2, and is arranged between the lining plate 14 and the cover plate 11. The friction material 16, which is an annular member, is not secured to the lining plate 14 or to the cover plate 13. The friction material 15 is slidably pressed on the lining plate 14 and the cover plate 11.

The first side plate 17 is an annular member arranged on an engine side of a flange part 25b of the hub member 25, viz., on the left side of Fig.1, and is a component part of the damper unit 3 and the hysteresis unit 4. The first side plate 17 is secured at a portion near its outer peripheral part as one solid body to the lining plate 14 and the second side plate 18 by rivet 19. The first side plate 17 includes a window 17a to accommodate therein the coil spring 20 and the seat member 21 in the intermediate damper unit 3. The peripheral end face of the window 17a is configured to be contacted with or separated away from the seat member 21. The first side plate 17 is slidably contacted with a first thrust member 22 in the hysteresis unit 4 which is situated more inwardly than the damper unit 3. The first side plate 17 has its inner peripheral part carried by a hub member 25 (hub part 25a) for relative rotational movement via the first thrust member 22.

The second side plate 18 is an annular member arranged on a transmission side of a flange part 25b of the hub member 25, viz., on the right side of Fig.1, and is a component part of the damper unit 3 and the hysteresis unit 4. The second side plate 18 is secured at a portion near its outer peripheral part as one solid body to the lining plate 14 and the first side plate 17 by the rivet 19. The second side plate 18 includes a window 18a to accommodate therein the coil spring 20 and the seat member 21 in the interposed damper unit 3. The peripheral end face of the window 18a is configured to be contacted with or separated away from the seat member 21. The second side plate 18 carries a conical spring 24 in the hysteresis unit 4 which is situated more inwardly than the damper unit 3. The second side plate 18 has its inner peripheral part carried by the hub member 25 (hub part 25a) for relative rotational movement via a second thrust member 23.

The rivet 19 is used for securing the lining plate 14, the first side plate 17 and the second side plate 18 together.

The coil spring 20, a component part of the damper unit 3, is housed within window parts 17a, 18a and 25c, formed in the side plates 17, 18 and in the hub member 25, respectively, and are contacted with the seat member 21 arranged on both ends. The coil spring 20 is contracted when the side plates 17, 18 and the hub member 25 perform relative rotational movement to absorb shock(s) caused by differential rotation of the side plates 17, 18 and the hub member 25. The coil spring 20 may be straight-shaped, or may be bent from the straight shape, with the bent parts being then put together. To allow for broad torsion, an arc spring, bent along a peripheral direction, may also be used.

The seat member 21 is a component part of the damper unit 3, and is housed within the window parts 17a, 18a and 25c formed in the side plates 17, 18 and the hub member 25 (flange part 25b), respectively. The seat member is arranged between the peripheral end faces of the window parts 17a, 18a and 25c and the ends of the coil spring 20. To reduce the wear caused to the coil spring 20, the seat member 21 may be formed of resin.

The first thrust member 22 is a component part of the hysteresis unit 4, and is an annular member arranged between the first side plate 17 and the hub member 25. When seen in the axial direction, the first thrust member 22 is arranged between the first side plate 17 and the flange part 25b, and is slidably pressed on the first side plate 17 and the flange part 25b. The first thrust member 22 is also interposed in the radial direction between the first side plate 17 and the hub part 25a, and functions as a slide bearing (bush) for carrying the first side plate 17 for rotation relative to the hub part 25a.

The second thrust member 23 is a component part of the hysteresis unit 4, and is an annular member arranged between the second side plate 18 and the hub member 25. When seen in the radial direction, the second thrust member 23 is arranged between the conical spring 24 and the flange part 25b, and is biased by the conical spring 24 towards the flange part 25b into slidable pressed on the flange part 25b. When seen in the radial direction, the second thrust member 23 is interposed between the second side plate 18 and the hub member 25a, and operates as a slide bearing (bush) for carrying the second side plate 18 for rotation with respect to the hub part 25a.

The conical spring 24, a component part of the hysteresis unit 4, is arranged between the second thrust member 23 and the second side plate 18. It is a saucer-shaped spring that biases the second thrust member 23 towards the flange part 25b.

The hub member 25 outputs rotational power from the damper unit 3 and the hysteresis unit 4 towards a transmission unit, and is a component part of the damper unit 3 and the hysteresis unit 4. The hub member 25 includes the flange part 25b extended from a preset site on the outer periphery of the hub part 25a. The inner peripheral surface of the hub part 25a is in splined engagement with the transmission side rotational shaft 7. The outer periphery of the hub part 25a carries the first side plate 17 for relative rotational movement via the first thrust member 22, while carrying the second side plate 18 for relative rotational movement via the second thrust member 23. The flange part 25b includes the window part 25c to accommodate the coil spring 20 and the seat member 21 by the damper unit 3 on the outer peripheral part. The peripheral end face of the window 25c is configured to be in or out of contact with the seat member 21. The flange part 25b is slidably sandwiched between the thrust members 22, 23 by the portions of the axial end faces of the hysteresis unit 4 lying more radially inwardly than the damper unit 3.

With Example 1, the guide part 13b (stepped shoulder part) and the guide part (stepped shoulder part) 11b for guiding the friction materials 15, 16 are provided on the pressure plate 13 and the cover plate 11, respectively. The pressure plate 13 and the cover plate 11 act as members frictionally contacted with the friction materials 15, 16. It is thus possible to suppress the friction materials 15, 16 from becoming radially offset. In other words the guide parts 13b, 16 prevent (restrict) the friction materials 15, 16 from radially outward movement, so that there is no necessity of securing the friction materials 15, 16 to other members by adhesives or fastening means, such as rivets, thereby reducing the cost. Moreover, the friction materials 15, 16 may be improved in strength by providing the guide part 13b and the guide part 11b on the outer rim of the friction materials 15, 16, respectively.

In the limiter unit of the conventional torque fluctuation absorber as shown in JP2005-127507A, in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to an eleventh aspect, in the torque fluctuation absorber of the first aspect, preferably, the second plate member has a guide part.

According to a twelfth aspect, in the torque fluctuation absorber of the second or eleventh aspect, the friction material is preferably configured annularly, and the guide part is preferably formed as a bent portion bent substantially at right angles relative to the radial direction of the friction material.

Based on the above formation, the friction material is inhibited from radial offset, which obviates the need of securing the friction material through bonding by adhesive, reduces the cost, and can secure the strength of the friction material. Further cost reduction may be achieved by reduction in the number of parts.

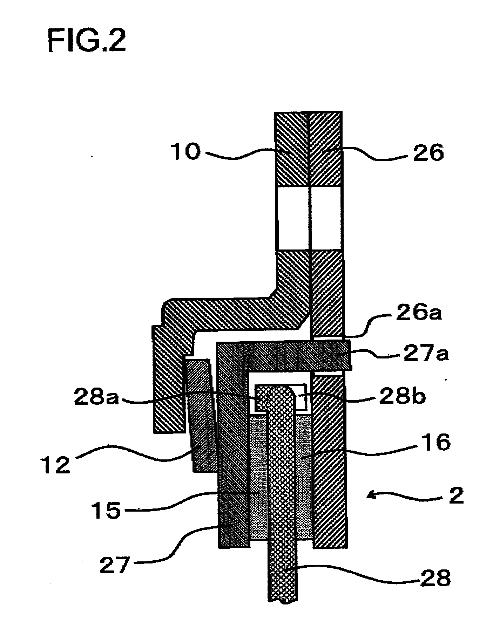

An embodiment (Example 2) of the torque fluctuation absorber according to the eleventh and twelfth aspects will now be described with reference to the drawings. Fig.2 depicts a radial partial cross-sectional view schematically showing the structure of a limiter unit of the torque fluctuation absorber according to Example 2.

In Example 1, the pressure plate (13 of Fig.1) and the cover plate (11 of Fig.1) in the limiter unit (2 of Fig.1), frictionally contacted with the friction materials (15, 16 of Fig.1), are formed with the guide parts (13b, 11b of Fig.1) to suppress the offsetting of the friction materials (15, 16 of Fig.1). In Example 2, no guide parts are provided on the pressure plate 27 or on the cover plate 26. Instead, guide parts 28a, 28b are provided on a lining plate 28, which is to be frictionally contacted with the friction materials 15, 16, such as to suppress the radial offsetting of the friction materials 15, 16. The present Example is otherwise the same as the Example 1.

The pressure plate 27 and the cover plate 26 are similar in structure to the pressure plate (13 of Fig.1) and to the cover place (11 of Fig.1) of Fig.1 except not having the guide parts.

The lining plate 28 includes the guide parts (formed as stepped shoulder parts) 28a, 28b that guide the friction materials 15, 16 on the outer peripheral sides of the friction materials 15, 16 to suppress the offsetting (radial shifting) of the friction materials 15, 16. The guide part 28a is a protuberance axially directed towards the friction material 15 in such a manner that the inner peripheral surface of the protuberance guides the outer peripheral surface of the friction material 15. The guide part 28b is a protuberance axially directed towards the friction material 16 in such a manner that the inner peripheral surface of the protuberance guides the outer peripheral surface of the friction material 16. The guide parts 28a, 28b are alternately formed on the outer periphery of the lining plate 28. The guide parts 28a, 28b may be formed by press working. Otherwise, the lining plate 28 is similar in structure to the lining plate (14 of Fig.1) of Example 1.

In Example 2, the lining plate 28, frictionally contacted with the friction materials 15, 16, is provided with the guide parts 28a, 28b configured to guide the friction materials 15, 16 such as to suppress radial offsetting of the friction materials 15, 16. In other words, the guide parts 28a, 28b prevent radially outward movement of the friction materials 15, 16, and thus, there is no necessity of securing the friction materials 15, 16 to other members by fastening means, such as rivets, thereby reducing the cost. Further, by providing the guide parts 28a, 28b on the outer rim of the friction materials 15, 16, it is possible to maintain the strength of the friction materials 15, 16.

### [Example 3]

In the limiter unit of the conventional torque fluctuation absorber as shown in JP2005-127507A, in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a thirteenth aspect, a torque fluctuation absorber comprises a first plate member, a second plate member biased towards the first plate member and rotatable relative to the first plate member, and a friction material arranged between the first and second plate members and pressed on the first plate member slidably along the direction of rotation of the second plate member. The friction material is engaged with the second plate member so that relative movement therebetween is prevented. Preferably, the second plate member has a hole(s) and the friction material has a protrusion(s) fitted into the hole(s).

According to a fourteenth aspect, a torque fluctuation absorber comprises a first plate member, a second plate member biased towards the first plate member and rotatable relative to the first plate member, and a friction material arranged between the first and second plate members and pressed on the first plate member slidably along the direction of rotation of the second plate member. Preferably, there are further provided a support member rotatable in unison with the first plate member; a third plate member arranged between the second plate member and the support member; a resilient member arranged between the support member and the third plate member and adapted for biasing the third plate member towards the second plate member; and another friction material arranged between the second and third plate members and pressed on the third plate member slidably along the direction of rotation of the third plate member. The other friction material is engaged with the second plate member so that relative movement therebetween is prevented, preferably.

According to a fifteenth aspect, in the torque fluctuation absorber of the fourteenth aspect, the second plate member preferably has other hole(s), into which other protrusion(s) of the other friction material is filled.

According to a 16th aspect, a torque fluctuation absorber comprises a first plate member, a second plate member biased towards the first plate member and rotatable relative to the first plate member, and a friction material arranged between the first and second plate members and pressed on the first plate member slidably along the direction of rotation of the second plate member.
And preferably, a material less prone to rusting than iron, a surface processed material or a thermally processed material is used for forming the first plate member.

According to a 17th aspect, in the torque fluctuation absorber according to the 16th aspect, preferably, stainless steel is used for forming the first plate member, and a surface of the third plate member in contact with the other friction material is processed with roughing.

According to an 18th aspect, in the torque fluctuation absorber according to the 14th aspect, preferably, a material less prone to rusting than iron, a surface processed material or a thermally processed material is used for forming the first plate member.

According to a 19th aspect, in the torque fluctuation absorber according to the 18th aspect, preferably, stainless steel is used for forming the third plate member, and a surface of the third plate member in contact with the other friction material is processed with roughing.

According to a 20th aspect, a torque fluctuation absorber includes a torque fluctuation absorber comprises a first plate member, a second plate member biased towards the first plate member and rotatable relative to the first plate member, and a friction material arranged between the first and second plate members and pressed on the first plate member slidably along the direction of rotation of the second plate member.
And, preferably, the friction material is annular in shape and engages with the second plate member so that the friction material is prevented from radially outward movement.

According to a 21st aspect in the torque fluctuation absorber according to the 14th aspect, preferably, the friction material is annular in shape, and engages the second plate member so that the friction material is prevented from radially outward movement.

According to the above formation, the radial offset of the friction material is suppressed, which obviates the need of bonding the friction material to the other member, provides cost reduction, and ensures the strength of the friction material.

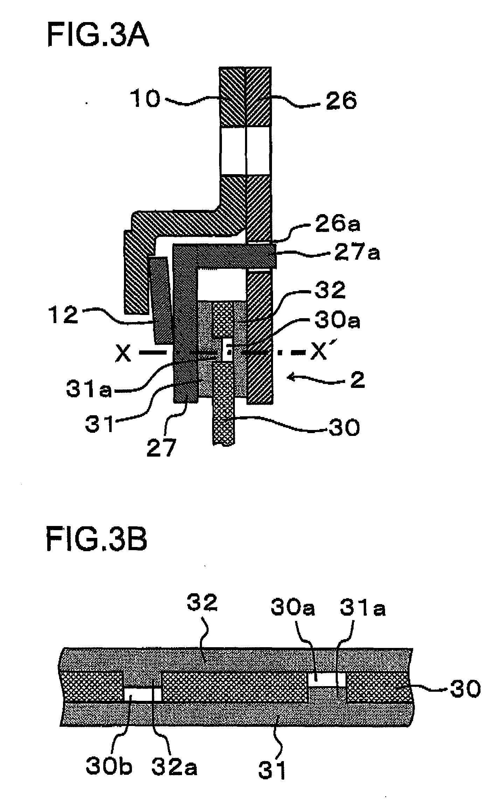

An embodiment, or a torque fluctuation absorber according to the 13th to 21st aspect (Example 3) will now be described with reference to the drawings. Fig.3A depicts a radial partial cross-sectional view schematically showing the structure of a limiter unit of a torque fluctuation absorber 1 according to Example 3. Fig.3B depicts a circumferential partial cross-sectional view taken along line X-X' of Fig.3A. It is observed that Fig.3B shows only the combination of a lining plate 30 and friction materials 31, 32.

In Example 1, the guide parts (13b, 11b of Fig.1) are respectively provided on the pressure plate (13 of Fig.1) and the cover plate (11 of Fig.1) adapted to be frictionally contacted with the friction materials (15, 16 of Fig.1). It is thus possible to suppress the offsetting of friction materials (15, 16 of Fig.1). In Example 3, instead of providing the guide parts, the friction materials 31, 32 are provided with protrusions 31a, 32a, respectively, and the lining plate 30 is provided with holes 30a, 30b. The protrusions 31a, 32a are respectively fitted into corresponding holes 30a, 30b for non-movable engagement therebetween. Otherwise, the present Example is similar to Example 1, except that, as regards the pressure plate 27 and the cover plate 26, the present Example is similar to Example 2.

The outer peripheral part of the lining plate 30 is arranged between the friction materials 31, 32, and has the hole 30a into which is fitted the protrusion 31a of the friction material 31. The outer peripheral part of the lining plate also has the hole 30b into which is fitted the protrusion 32a of the friction material 32. A number of the holes 30a and a number of the holes 30b are alternately formed at preset intervals on the same circumference. The lining plate 30 is otherwise similar in structure to the lining plate (14 of Fig.1) of Example 1.

The protrusion 31a, fitted into the hole 30a of the lining plate 30, is provided on the surface of the friction material 31 facing the lining plate 30. The protrusion 31a is not fitted into the opening 30b. The radial shifting (radially outward movement) of the friction material 31 with respect to the lining plate 30 is prevented by engagement of the protrusion 31a in the hole 30a. The friction material 31 is slidably pressed on only the pressure plate 27. The friction material 31 is otherwise similar to the friction material (15 of Fig.1) of Example 1.

The protrusion 32a, fitted into the hole 30b of the lining plate 30, is formed on the surface of the friction material 32 facing the lining plate 30. The protrusion 32a is not fitted into the opening 30a. The radial shifting (radially outward movement) of the friction material 32 with respect to the lining plate 30 is prevented by engagement of the protrusion 32a in the hole 30b. The friction material 32 is slidably pressed on only the cover plate 26. The friction material 32 is otherwise similar to the friction material (16 of Fig.1) of Example 1.

In the present Example 3, in which the protrusions 31a, 32a of the friction materials 31, 32 are fitted into the holes 30a, 30b of the lining plate 30, the friction materials 31, 32 are not shifted in the radial direction (not moved radially outwardly). It is thus unnecessary to secure the friction materials 31, 32 to other parts by fastening means, such as rivets, thus reducing the cost. Moreover, since the friction materials 31, 32 are not interconnected via the holes 30a, 30b of the lining plate 30, it is possible to prevent the friction materials 31, 32 from lowering in strength. In addition, since the frictional surfaces of the friction materials 31, 32 are specified, it is possible to stabilize the characteristics of the friction materials 31, 32.

### [Example 4]

In the limiter unit of the conventional torque fluctuation absorber as shown in JP 2005-127507A, in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole bored in the lining plate, the adhesive may not be evenly pervaded in the through-hole, thus again raising the problem in connection with strength of the friction material.

According to a 22nd aspect of this disclosure a torque fluctuation absorber includes a first plate member, a second plate member biased towards the first plate member and rotatable relative to the first plate member, and a friction material arranged between the first and second plate members and pressed on the second plate member slidably along a direction of rotation of the second plate member, Preferably, there are further provided a support member rotatable in unison with the first plate member; a third plate member arranged between the second plate member and the support member; a resilient member arranged between the support member and the third plate member and adapted for biasing the third plate member towards the second plate member; and another friction material arranged between the second and third plate members and pressed on the third plate member slidably along the direction of rotation of the third plate member. The other friction material is engaged with'the second plate member so that relative movement therebetween is inhibited, preferably. The friction member and the other friction member are formed integral with the second plate member, preferably.

According to a 23rd aspect, in the torque fluctuation absorber of the 22nd aspect, preferably, the second plate member has a plurality of protrusions on the circumferential surface, the protrusions being embedded in the bulk of friction material(s).

According to above formation, the radial offset of the friction material(s) is suppressed, which obviates the need of securing the friction material(s) to the other member by bonding with adhesive, reduces the cost, and ensures the strength of the friction material. Also, further reduction in cost is achieved by reduction in the number of parts.

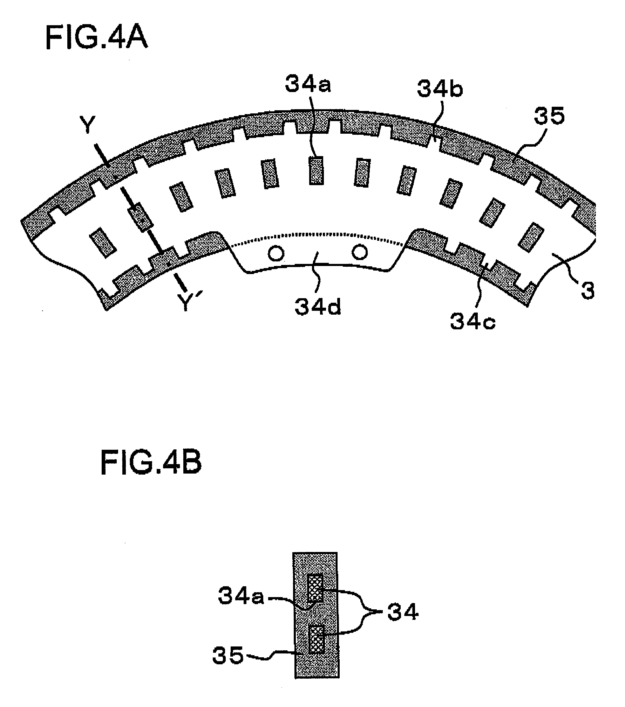

An embodiment (Example 4) of a torque fluctuation absorber 1 according to the 22nd and 23rd aspects will now be described with reference to the drawings. Fig.4A depicts a partial planar cross-sectional view schematically showing the structure of the combination of the friction materials and the lining plate in the torque fluctuation absorber 1 according to Example 4. Fig.4B depicts a cross-sectional view taken along line Y-Y' of Fig.4A.

In Example 3, the protrusions (31a, 32a of Fig.3) of the friction materials (31, 32 of Fig.3) are fitted into the mating holes (30a, 30b of Fig.3) of the lining plate (30 of Fig.3) to prevent radial shifting of the friction materials (31, 32 of Fig.3). In Example 4, a lining plate 34 is unified to friction materials 35 on both sides of the lining plate 34. In addition, the friction materials 35 on both sides of the lining plate 34 are interconnected on the inner and outer peripheral parts of the lining plate 34 so that the friction materials 35 are non-movably engaged with the lining plate 34. Moreover, in Example 4, a plurality of outer peripheral protrusions 34b are formed on the outer peripheral end faces of the lining plate 34, and a plurality of inner peripheral protrusions 34c are formed on the inner peripheral end faces thereof. Otherwise, the present Example is similar to Example 3.

The lining plate 34 is sandwiched between a first side plate (equivalent to 17 of Fig.1) and a second side plate (equivalent to 18 of Fig.1) by a connection part 34d protruded on its inner periphery. The lining plate is clamped, together with the first side plate (equivalent to 17 of Fig.1) and the second side plate (equivalent to 18 of Fig.1), by a rivet(s) (equivalent to 19 of Fig.1). The friction materials 35 are molded as one solid body with the lining plate 34 at an outer peripheral annular part of the lining plate 34. The annular part of the lining plate 34 has a plurality of holes 34a in addition to a plurality of the outer peripheral protrusions 34b and a plurality of the inner peripheral protrusions 34c. The friction materials 35 on both surfaces are interconnected in the holes 34a. The outer peripheral protrusions 34b and the inner peripheral protrusions 34c are embedded in the bulk of the friction materials 35. Otherwise, the lining plate 34 is similar in structure to the lining plate (14 of Fig.1) of Example 1.

The friction materials 35 are molded as one solid body with the annular part of the lining plate 34. The friction materials 35 on both sides of the lining plate 34 are interconnected via the holes 34a. In addition, the friction materials 35 are connected on both sides of the lining plate 34 astride the inner and outer peripheral parts thereof. It is preferred that the interconnecting portions of the friction materials 35 at the inner and outer peripheries of the lining plate 34 account for about 1/5 or more of the entire area of the friction materials. The outer peripheral protrusions 34b and the inner peripheral protrusions 34c of the lining plate 34 are embedded in the bulk of the friction materials 35. Otherwise, the friction material 35 is similar in structure to the friction material (15 of Fig.1) of Example 1.

With the present Example 4, in which the lining plate 34 and the friction materials 35 are integrally molded, the friction materials 35 may not be shifted radially. In addition, there is no necessity of securing the friction materials 35 to other parts with an adhesive or by fastening means, such as rivets, thus reducing the cost. Further, the friction materials 35 are interconnected at the inner and outer peripheries of the lining plate 34, as described above. Hence, the friction materials may be improved in binding force and in strength and may be high in fluidity at the time of molding, thus avoiding insufficient strength of the friction materials 35. Moreover, the outer peripheral protrusions 34b and the inner peripheral protrusions 34c of the lining plate 34 are embedded in the bulk of the friction materials, thus further improving the strength.

### [Example 5]

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 24th aspect of this disclosure a torque fluctuation absorber preferably includes a first plate member, a second plate member biased towards the first plate member and rotatable relative to the first plate member

According to a 25th aspect, in the torque fluctuation absorber according to a 24th aspect, preferably, there are further provided a support member rotated integrally with the first plate member; a third plate member arranged between the second plate member and the support member; and a resilient member arranged between the support member and the third plate member and adapted for biasing the third plate member towards the second plate member. The second plate member is slidably pressed on the third plate member.

According to a 26th aspect in the torque fluctuation absorber according to the 24th aspect, preferably, the second plate member is formed of a material comprising an organic substance and fiber.

According to a 27th aspect, in the torque fluctuation absorber according to the 24th aspect, preferably, a material less prone to rusting than iron, a surface processed material or a thermally processed material is used for forming the first plate member.

According to a 28th aspect, in the torque fluctuation absorber according to the 27th aspect, preferably, stainless steel is used for forming the first plate member, and a surface of the first plate member in contact with the other friction material is processed with roughing.

According to a 29th aspect, in the torque fluctuation absorber according to the 25th aspect, preferably, a material less prone to rusting than iron, a surface processed material or a thermally processed material is used for forming the third plate member.

According to a 30th aspect, in the torque fluctuation absorber according to the 29th aspect, preferably, stainless steel is used for forming the third plate member, and a surface of the third plate member in contact with the other friction material is processed with roughing.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

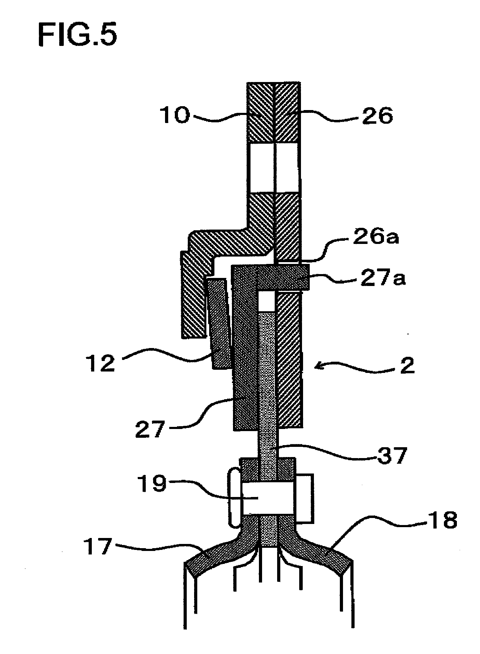

An embodiment (Example 5) of a torque fluctuation absorber 1 according the 24th to 30th aspects will now be described with reference to the drawings. Fig.5 is a radial partial cross-sectional view schematically showing the structure of a limiter unit of the torque fluctuation absorber according to Example 5.

In Example 3, the friction materials (31, 32 of Fig.3) are engaged with both sides of the lining plate (30 of Fig.3). In Example 5, a friction plate 37 is used in place of the lining plate and the friction materials. Otherwise, the present Example is similar to Example 3.

The friction plate 37 is an annular member arranged between the cover plate 11 and the pressure plate 13, and is a component part of the limiter unit 2. The inner peripheral portion of the friction plate 37 is sandwiched between the first side plate 17 and the second side plate 18, and is fastened with the plates 17, 18 by the rivet 19. The friction plate 37 has its outer peripheral portion arranged between the cover plate 11 and the pressure plate 13 so as to be slidably pressed on the plates 11, 13. The friction plate 37 is formed of a material containing an organic material, such as rubber or resin, as a base material, and also containing fibers (glass fibers or carbon fibers) or particles used for adjusting the frictional coefficient µ.

With the present Example 5, the friction plate 37, fastened to the side plates 17, 18, plays the functions of a lining plate and friction materials. Hence, the number of the parts may be reduced to achieve low cost. Moreover, since the friction plate 37 has no joint or seam, it is possible to prevent that the friction plate 37 is deteriorated in strength.

### [Example 6]

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 31st aspect of this disclosure, in the torque fluctuation absorber of the 25th aspect, the surface of the second plate member is preferably coated with a friction material.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

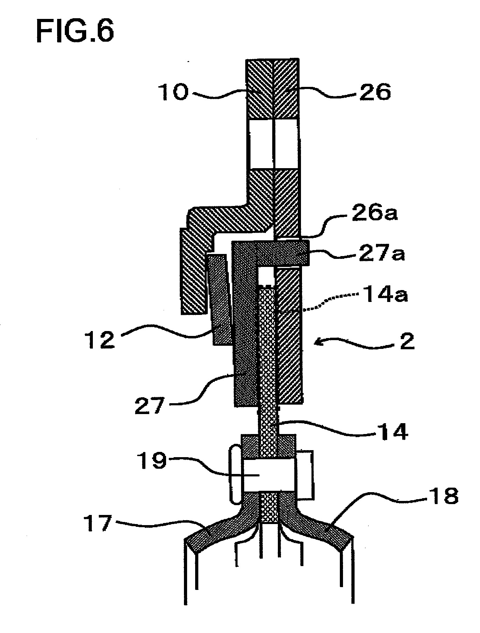

An embodiment (Example 6) of a torque fluctuation absorber 1 according to the 31st aspect will now be described with reference to the drawings. Fig.6 is a radial partial cross-sectional view schematically showing the structure of the torque fluctuation absorber according to Example 6.

In Example 5, the friction plate (37 of Fig.5) is arranged between the cover plate (26 of Fig.5) and the pressure plate (27 of Fig.5), and the friction plate (37 of Fig.5) is fastened to the side plates (17 and 18 of Fig.5) by the rivet (19 of Fig.5). In Example 6, a coated part 14a, obtained on coating the surface of the lining plate 14 with a frictional operating material, is used in place of the friction plate. The coated part 14a may be formed by such means as spraying an organic or inorganic material having a frictional function. The coated part 14a is slidably pressed on the pressure plate 27 and with the cover plate 26. Otherwise, the present Example is similar to Example 5.

With Example 6, the lining plate 14, on whose surface has been formed the coated part 14a, plays the functions as a lining plate and as friction materials. Hence, the number of the component parts may be reduced to achieve low cost. Moreover, since the lining plate 14 itself has no joint or seam, it is possible to prevent that the friction plate 37 is deteriorated in strength.

### [Example 7]

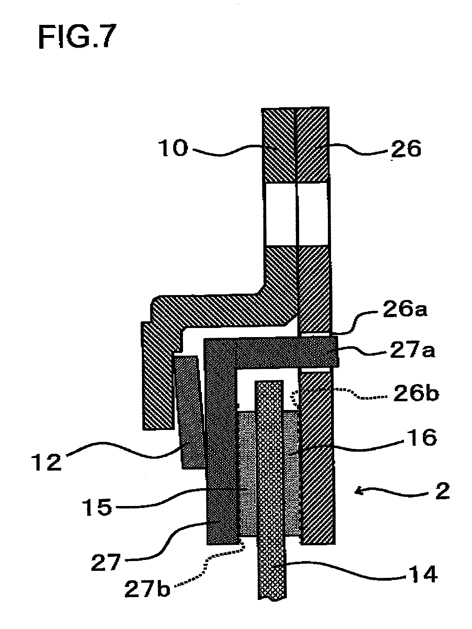

A torque fluctuation absorber according to an embodiment (Example 7) of the present disclosure will now be described with reference to the drawings. Fig.7 is a radial partial cross-sectional view schematically showing the structure of a limiter unit of the torque fluctuation absorber according to Example 7.

In Example 1, the friction material (15 of Fig.1) is slidably pressed on the lining plate (14 of Fig.1) and the pressure plate (13 of Fig.1), while the friction material (16 of Fig.1) is slidably pressed on the lining plate (14 of Fig.1) and with the cover plate (11 of Fig.1). In Example 7, the slide surfaces of the pressure plate 27 and the cover plate 26 are processed to elevate the frictional coefficient thereat to produce high frictional coefficient parts 27b, 26b. By so doing, the friction material 15 and the pressure plate 27 are rendered less susceptible to sliding relative to each other than the friction material 15 and the lining plate 14, while the friction material 15 and the cover plate 26 are rendered less susceptible to sliding relative to each other than between the friction material 16 and the lining plate 14. Otherwise, the present Example is similar to Example 1, except the pressure plate 27 and the cover plate 26 which are similar to Example 2.

An outer peripheral part of the lining pate 14 is placed between the friction materials 15, 16 and is pressed therewith as the slide movement of the lining plate 14 is allowed. To prevent affixture of the lining plate 14 to the friction materials 15, 16 due to rusting, the lining plate 14 is preferably formed of a material not susceptible to rusting, such as stainless steel. Moreover, to assure a sufficient value of the frictional coefficient µ, the lining plate is preferably surface-processed, such as with plating, or thermally processed. The reason the lining plate is surface-processed or thermally processed is that stainless steel, for example, tends to be low in its frictional coefficient µ until such time that the stable state of friction is reached. The lining plate of the present Example is otherwise the same as the lining plate (14 of Fig.1) of Example 1.

The cover plate 26 has the high frictional coefficient part 26b whose slide surface has been processed for raising its frictional coefficient. The high frictional coefficient part 26b keeps the friction material 16 in a difficult state of relative rotation. The high frictional coefficient part 26b may be obtained by molding or applying a frictional coefficient raising component or by roughing (acid washing or shot peening). The present Example is otherwise the same as the cover plate (26 of Fig.2) of Example 2.

The pressure plate 27 has a high frictional coefficient part 27b obtained on processing its slide surface with a frictional coefficient raising treatment. The high frictional coefficient part 27b keeps the friction material 15 in a difficult state of relative rotation. The high frictional coefficient part 27b may be obtained by molding or applying a frictional coefficient raising component or by roughing (acid washing or shot peening). The present Example is otherwise the same as the pressure plate (27 of Fig.2) of Example 2.

In Example 7, the same friction materials 15, 16 as those used in Example 1 are used. It is however possible to process the slide surfaces of the pressure plate 27 of the friction material 15 and the cover plate 26 of the friction material 16 with frictional coefficient raising processing, instead of forming the high frictional coefficient parts 27b, 26b on the slide surfaces of the pressure plate 27 and the cover plate 26.

In Example 7, the high frictional coefficient parts 27b, 26b are formed by performing frictional coefficient elevating processing on the slide surfaces of the pressure plate 27 and the cover plate 26. By so doing, the friction material 15 and the pressure plate 27 are rendered less susceptible to sliding relative to each other than between the friction material 15 and the lining plate 14, while the friction material 16 and the cover plate 26 are rendered less susceptible to sliding relative to each other than between the friction material 16 and the lining plate 14. In this manner, the friction material 15 is frictionally engaged with the pressure plate 27 in a difficult state of relative movement, while the friction material 16 is frictionally engaged with the cover plate 26 in a difficult state of relative movement. Hence, it becomes unnecessary to secure the friction materials 15, 16 to other parts by an adhesive or by fastening means, such as rivets, thus reducing the cost, and assuring high strength of the friction materials 15, 16. Moreover, the lining plate 14, sliding between the friction materials 15, 16, is of a reduced diameter smaller than that of the cover plate 26, so that, even if a high grade material is used or high quality processing is used, the cost may not be unreasonably high. Further, only one component, that is, the lining plate 14, slides between the friction materials 15, 16, and hence the processing such as that for stabilizing the frictional coefficient or rust-proofing needs to be made only for the lining plate 14. Hence, the cost may be lowered.

### [Example 8]

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 32nd aspect of this disclosure a torque fluctuation absorber preferably includes a first plate member; a second plate member biased towards the first plate member and rotatable relative to the first plate member; and a friction material arranged between the first and second plate members and pressed on the second plate member slidably along a direction of rotation of the second plate member. The friction material is, preferably, engaged with the first plate member to prevent relative movement to the first plate member or to be movable relative to the first plate member within a preset distance but to prevent further movement than the preset distance. The friction material is annular in form and in engagement with first plate member so that the friction material is prevented from radially outward movement, preferably.

According to a 33rd aspect in the torque fluctuation absorber according to the 32nd aspect, preferably, there are further provided a support member rotatable in unison with the first plate member; a third plate member arranged between the second plate member and the support member; a resilient member arranged between the support member and the third plate member and adapted for biasing the third plate member towards the second plate member; and another friction material arranged between the second and third plate members and pressed on the second plate member slidably along the direction of rotation of the second plate member. Preferably, the other friction material is engaged with the third plate member so that relative movement relative to the third plate member is inhibited, or is movable within a present distance relative to the third plate member and immovable exceeding the present distance. Also, the other friction material is preferably annular in shape and in engagement with the third plate member so that the radially outward movement thereof is prevented.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

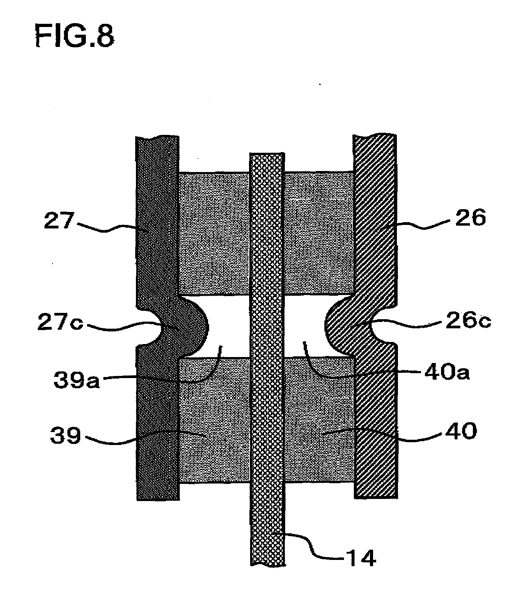

An embodiment of a torque fluctuation absorber disclosed herein, or an embodiment (Example 8) of a torque fluctuation absorber according to the 32nd and 33rd aspects will now be described with reference to the drawings, Fig.8 is a radial partial cross-sectional view schematically showing the structure of a limiter unit of the torque fluctuation absorber in the vicinity of its sliding surfaces according to Example 8.

In Example 7, the high frictional coefficient parts (27b, 26b of Fig.7) are formed on the sliding surfaces of the pressure plate (27 of Fig.7) and the cover plate (26 of Fig.7). As a result, the friction material (15 of Fig.7) and the pressure plate (27 of Fig.7) are rendered less susceptible to sliding relative to each other than between the friction material (15 of Fig.7) and the lining plate (14 of Fig.7), while the friction material (16 of Fig.7) and the cover plate (26 of Fig.7) are rendered less susceptible to sliding relative to each other than between the friction material (16 of Fig.7) and the lining plate (14 of Fig.7). In this manner, the friction material (15 of Fig.7) is held or engaged with the pressure plate (27 of Fig.7) to prevent relative movement, or to allow for relative movement in a preset distance but to prevent relative movement farther than the preset distance. On the other hand, the friction material (16 of Fig.7) is held or engaged with the cover plate (26 of Fig.7) to prevent relative movement, or to allow for relative movement in a preset distance but to prevent relative movement farther than the preset distance. In Example 8, high frictional coefficient parts are not provided on the slide surface of the pressure plate 27 or on that of the cover plate 26. Instead, the pressure plate 27 and the cover plate 26 are provided with protrusions 27c, 26c, respectively, while annular friction materials 39, 40 are provided with holes or recesses 39a, 40a, respectively. Each of the protrusions 27c, 26c are fitted into the corresponding holes 39a, 40a, whereby the friction material 39 is retained by the pressure plate 27 to prevent relative rotation, while the friction material 40 is retained by the cover plate 26 to prevent relative rotation. Otherwise, the present Example is similar to Example 7.

The friction material 39 has a plurality of holes 39a. Each of the protrusions 27c of the pressure plate 27 is fitted into the corresponding holes 39a. The friction material 40 has a plurality of holes 40a. Each of the protrusions 26c of the cover plate 26 is fitted into the corresponding holes 40a, whereby radially outward movement of the friction material 40 is prevented. Otherwise, the friction materials are the same as those (15 and 16 of Fig.1) of Example 1. The number of the holes 39a, 40a can be either singular or plural.

The cover plate 26 has, on its side facing the friction material 40 and plurality of protrusions 26c. Each of the protrusions is fitted into the corresponding holes 40a to hold the friction material 40 to prevent relative rotation. The protrusions 26c are preferably formed by press working to reduce the cost. Otherwise, the cover plate 26 is similar in structure to the cover plate (26 of Fig.2) of Example 2.

The pressure plate 27 has, on its side facing the friction material 39, a plurality of the protrusions 27c. Each of the protrusions is fitted into the corresponding holes 39a to hold the friction material 39 to prevent relative rotation therebetween. The protrusions 27c are preferably formed by press working to reduce the cost. Otherwise, the pressure plate is similar in structure to the pressure plate (27 of Fig.2) of Example 2.

In Example 8, each of the protrusions 27c, 26c is fitted into the corresponding holes 39a, 40a, whereby the friction material 39 is retained by the pressure plate 27 to prevent relative rotation therebetween, while the friction material 40 is retained by the pressure plate 26 to prevent relative rotation therebetween. It is thus unnecessary to secure the friction materials 39, 40 by bonding or by fastening means, such as rivets, to other component parts, thereby reducing the cost and assuring the strength of the friction materials 39, 40. In addition, the lining plate 14, sliding between the friction materials 39, 40, is of a reduced diameter, so that, if a high grade material is used or high quality processing is used, the cost may not be unreasonably high. Moreover, since each of the protrusions 27c, 26c are fitted into the corresponding holes 39a, 40a, the lining plate 14 may be slid reliably between the friction materials 39, 40, thus assuring stabilized characteristics of the friction materials 39, 40.

### [Example 9]

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 34th aspect of this disclosure, a torque fluctuation absorber includes a first plate member, a second plate member biased towards the first plate member and rotatable relative to the first plate member, and a friction material arranged between the first and second plate members and pressed on the second plate member slidably along a direction of rotation of the second plate member. The friction material is engaged with the first plate member to prevent relative movement to the first plate member, or to be movable relative to the first plate member within a preset distance but to prevent further movement than the present distance. The friction material is, preferably, caulked to the first plate member by a rivet.

According to a 35th aspect, a torque fluctuation absorber includes a first plate member, a second plate member biased towards the first plate member and rotatable relative to the first plate member, and a friction material arranged between the first and second plate members and pressed on the second plate member slidably along a direction of rotation of the second plate member. The friction material is engaged with the first plate member to prevent relative movement to the first plate member, or to be movable relative to the first plate member within a preset distance but to prevent further movement than the preset distance. Preferably, there are further provided a support member rotatable integrally with the first plate member; a third plate member arranged between the second plate member and the support member; a resilient member arranged between the support member and the third plate member and adapted for biasing the third plate member towards the second plate member; and the other friction material arranged between the second and third plate members and pressed on the second plate member slidably along a direction of rotation of the second plate member. The other friction material is engaged with the third plate member to prevent relative movement to the third plate member, or to be movable relative to the third plate member within a preset distance but to prevent further movement than the preset distance. Preferably, the other friction material is caulked to the third plate member by the other rivet(s).

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

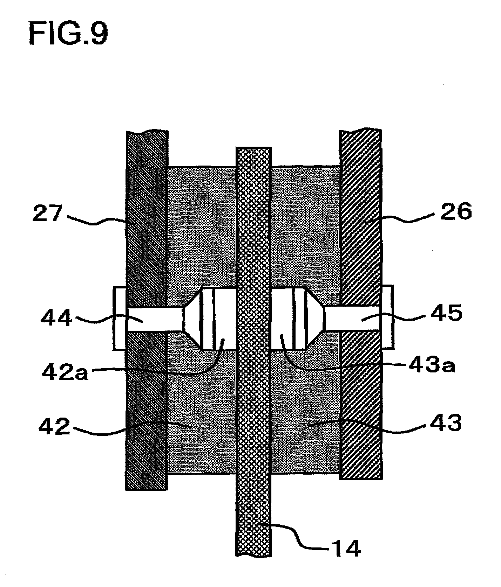

An embodiment of a torque fluctuation absorber disclosed herein, or an embodiment (Example 9) of the 34th and 35th aspects of a torque fluctuation absorber will now be described with reference to the drawings. Fig.9 is a radial partial cross-sectional view schematically showing the structure of a limiter unit of the torque fluctuation absorber in the vicinity of its sliding surfaces according to Example 9.

In Example 8, the protrusions (27c, 26c of Fig.8) of the pressure plate (27 of Fig.8) and the cover plate 26 (26 of Fig.8) are engaged in the mating holes (39a, 40a of Fig.8) of the friction materials (39, 40 of Fig.8), whereby the friction material (39 of Fig.8) is retained by the pressure plate (27 of Fig.8) to prevent relative rotation therebetween, while the friction material (40 of Fig.8) is retained by the pressure plate (26 of Fig.8) to prevent relative rotation therebetween. In Example 9, a friction material 42 is caulked by a rivet 44 to the pressure plate 27 such that it is retained by the pressure plate 27 to prevent the relative rotation therebetween. On the other hand, a friction material 43 is caulked by the rivet 45 to the cover plate 26 such that it is retained by the pressure plate 27 to prevent the relative rotation therebetween. Otherwise, the present Example is similar to Example 9. Meanwhile, both the friction materials 42, 43 are preferably secured to the pressure plate 27 and to the cover plate 26. However, only one of the friction materials may be so secured. The number of the rivets 44, 45 can be either singular or plural.

With the present Example 9, the friction material 42 is caulked by the rivet 44 to the pressure plate 27 and thereby retained such as to prevent relative rotation therebetween. On the other hand, the friction material 43 is caulked by the rivet 45 to the cover plate 26 and thereby retained by the pressure plate to prevent relative rotation therebetween. Hence, the cost may be reduced, while strength of the friction materials 42, 43 may be assured, in comparison with the case of bonding. In addition, the lining plate 14, sliding between the friction materials 42, 43, is of a reduced diameter small than that of the cover plate 26, so that, if a high grade material is used or high quality processing is used, the cost may not be raised. Moreover, since the friction materials 42, 43 are secured to the pressure plate 27 and the cover plate 26, associated therewith, the lining plate 14 may reliably be slid between the friction materials 42, 43, thus assuring stabilized characteristics of the friction materials 42, 43.

### [Example 10]

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 36th aspect, the torque fluctuation absorber according to the first aspect further comprises a damper unit(s), in which the second plate member also serves as a structural part of the damper unit(s).

According to a 37th aspect, a torque fluctuation absorber preferably comprises a torque fluctuation absorber including a first plate member; a second plate member biased towards the first plate member and rotatable relative to the first plate member; a friction material arranged between the first and second plate members and pressed on the first plate member slidably along a direction of rotation of the second plate member, in which the friction material is engaged with the second plate member so as to be not movable therebetween; and a damper unit(s). The second plate member preferably serves as a structural part of the damper unit(s).

According to a 38th aspect, the torque fluctuation absorber further comprises a damper unit(s), preferably, in which the second plate member serves as a structural part of the damper unit(s).

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

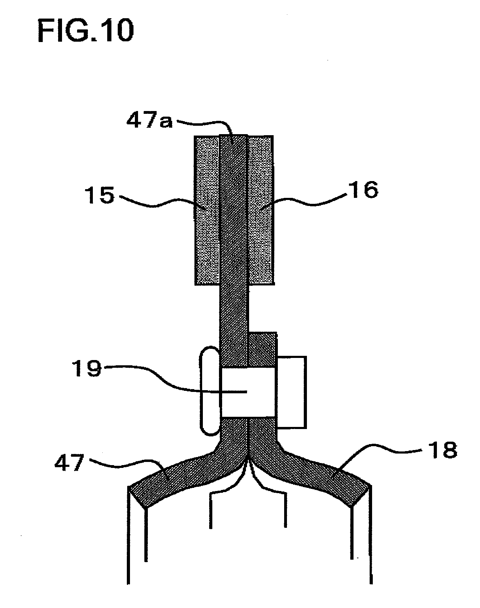

An embodiment of a torque fluctuation absorber disclosed herein, or an embodiment (Example 10) according to the 36th to 38th aspect will now be described with reference to the drawings. Fig.10 is a radial partial cross-sectional view schematically showing the structure of a portion of a limiter unit of the torque fluctuation absorber according to Example 10.

With Example 1, the lining plate 14, sliding between the friction materials 15, 16, is sandwiched between the first side plate 17 and the second side plate 18, and is secured by the rivet 19 along with the first and second side plates 17 and 18. In Example 10, the lining plate is not used, and the outer peripheral part of the first side plate 47 is extended to provide an outer peripheral extension 47a adapted for sliding between the friction materials 15, 16. The first side plate 47 is secured by the rivet(s) 19 along with the second side plate 18. The first side plate 47 serves as a structural part of the damper unit 3 in Fig. 1. The second side plate 18 may be so extended in place of extending the first side plate 47. Otherwise, the present Example is similar to Example 1. It is observed that the Example 10 may also be applied to Examples 2 and 5 to 9.

With Example 10, the advantages similar to those obtained with Example 1 may be obtained, while the number of the parts may be reduced to further reduce the costs.

### [Example 11]

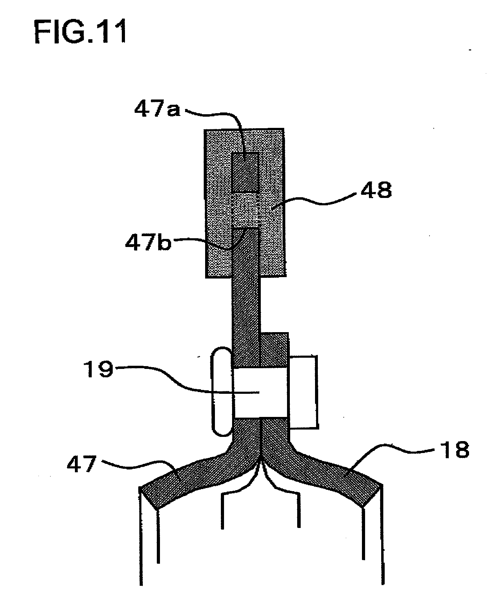

An embodiment (Example 11) of a torque fluctuation absorber disclosed herein will now be described with reference to the drawings. Fig.11 depicts a radial partial cross-sectional view schematically showing the structure of a portion of a limiter unit of the torque fluctuation absorber according to Example 11.

In Example 10, the outer peripheral part of the second side plate 47 is extended to provide the outer peripheral extension 47a, which outer peripheral extension 47a is adapted for sliding between the friction materials 15, 16. In Example 11, the outer periphery is extended to provide an outer peripheral extension 47a, which is provided with a hole 47b to unify the outer peripheral extension 47a and friction materials 48 arranged on either sides of the outer peripheral extension 47a. In Example 11, as in Example 4 (see Fig.4), the friction materials 48 are interconnected at the outer peripheral part of the outer peripheral extension 47a. The friction materials 48 may also be interconnected at an inner peripheral part of the outer peripheral extension 47a. The present Example is otherwise similar to Example 10. It is observed that the Example 11 may also be applied to Example 3.

With Example 11, the advantages similar to those obtained with Example 4 may be obtained, while the number of the parts may be reduced to further reduce the costs.

### [Example 12]

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 39th aspect, in the torque fluctuation absorber according to the first aspect, preferably, there are further provided a support member rotatable integrally with the first plate member, and a resilient member arranged between the second plate member and the support member and adapted for biasing the second plate member towards the first plate member.

According to a 40th aspect of this disclosure a torque fluctuation absorber, preferably, includes a first plate member; a second plate member biased towards the first plate member and rotatable relative to the first plate member; and a friction material arranged between the first and second plate members and pressed on the second plate member slidably along a direction of rotation of the second plate member, the friction material not movably engaging with the second plate member; a support member integrally rotatable with the first plate member; and a resilient member arranged between the second plate member and the support member and adapted for biasing the second plate member towards the first plate member.

According to a 41st aspect in the torque fluctuation absorber according to the 24th aspect, preferably, there are further provided a support member rotatable in unison with the first plate member; and a resilient member rotatable in unison with the first plate member and adapted for biasing the second plate member towards the first plate member.

According to a 42nd aspect a torque fluctuation absorber comprises a first plate member; a second plate member biased towards the first plate member and rotatable relative to the first plate member; and a friction material arranged between the first and second plate members and pressed on the second plate member slidably along the direction of rotation of the second plate member. The friction material is engaged with the first plate member to prevent relative movement to the first plate member, to be movable relative to the first plate member within a preset distance but to prevent further movement than the preset disclosure. Preferably, there are further provided a support member rotatable in unison with the first plate member; and a resilient member arranged between the support member and the second plate member and adapted for biasing the second plate member towards the first plate member.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

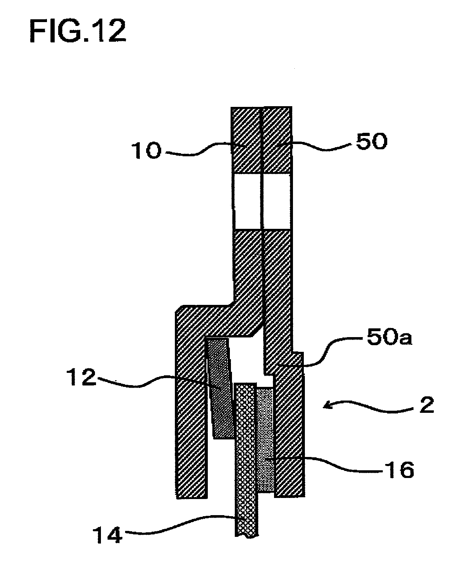

According to a torque fluctuation absorber disclosed herein, or an embodiment (Example 12) of a torque fluctuation absorber according to the 39th to 42nd aspects will now be described with reference to the drawings. Fig.12 depicts a radial partial cross-sectional view schematically showing the structure of a limiter unit of the torque fluctuation absorber according to Example 12.

In Example 1, the pressure plate (13 of Fig.1) and the friction material (15 of Fig.1) are thrust towards the lining plate (14 of Fig.1) under the force of the conical spring (12 of Fig.1). In Example 12, the lining plate 14 is directly acted on by the conical spring 12. In addition, it is the lining plate 14 and the cover plate 50 that are frictionally contacted with the friction material 16. Otherwise, the present Example is similar to Example 1. It is observed that the Example 12 may also be applied to Example 10 (see Fig.10).

With Example 12, the advantages similar to those obtained with Example 1 may be obtained, while the number of the parts may be reduced to further reduce the costs.

### [Example 13]

In the limiter unit of the conventional torque fluctuation absorber as shown in JP 2005-127507A in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole bored in the lining plate, the adhesive may not be evenly pervaded in the through-hole, thus again raising the problem in connection with strength of the friction material.

According to a 43rd aspect of the torque fluctuation absorber of the first aspect, preferably includes a resilient rotatable in unison with the first plate member and having a resilient part plate for biasing the second plate member toward the first plate member.

According to a 44th aspect, a torque fluctuation absorber comprises a first plate member; a second plate member biased towards the first plate member and rotatable relative to the first plate member; a friction material arranged between the first plate member and the second plate member and pressed on the first plate member slidably along a direction of rotation of the second plate member; and a resilient plate rotatable in unison with the first plate member and having a resilient portion for biasing the second plate member toward the first plate member.

According to a 45th aspect, in the torque fluctuation absorber according to the 24th aspect, according to the 24th aspect preferably, comprises a resilient plate rotatable in unison with the first plate member and having a resilient portion for biasing the second plate member toward the first plate member.

According to a 46th aspect, a torque fluctuation absorber includes a first plate member; a second plate member biased towards the first plate member and rotatable relative to the first plate member; and a friction material arranged between the first and second plate members and pressed on the second plate member slidably along a direction of rotation of the second plate member. The friction material is engaged with the first plate member to prevent relative to relative movement to the first plate member, or to be movable relative to the first plate member within a preset distance but to prevent further movement than the preset distance. There is further provided a resilient plate rotatable in unison with the first plate member and having a resilient portion for biasing the second plate member toward the first plate member.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

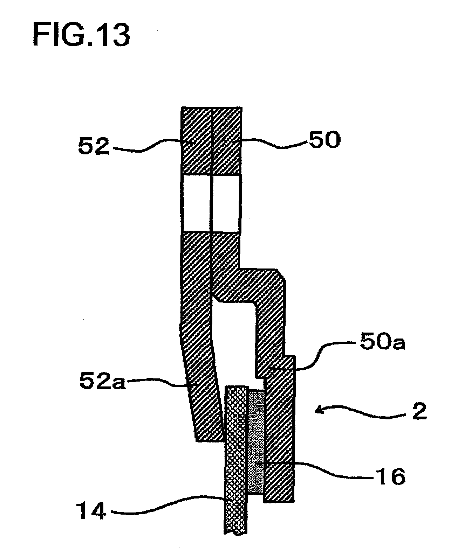

An embodiment of a torque fluctuation absorber disclosed herein, or an embodiment (Example 13) of a torque fluctuation absorber according to the 47th to 49th aspects will now be described with reference to the drawings. Fig.13 depicts a radial partial cross-sectional view schematically showing the structure of a limiter unit of the torque fluctuation absorber according to Example 13.

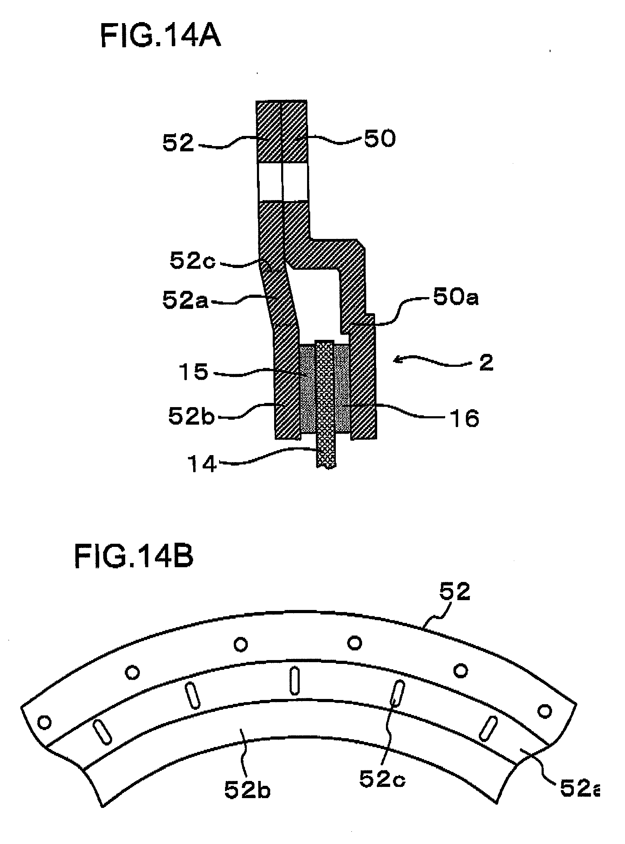

In Example 12, the conical spring (12 of Fig.12), arranged between the support plate (10 of Fig.12) and the lining plate (14 of Fig.12), directly acts on the lining plate (14 of Fig.12). In Example 13, a resilient plate 52, having the functions of both the support plate and the conical spring, is used. A resilient plate 52 is placed at its outer peripheral part in contact with a cover plate 50, and is secured to the flywheel (5 of Fig.1) by a bolt (equivalent to 9 of Fig.1). The annular resilient plate 52 has a conical spring part 52a at its inner peripheral part. This conical spring part 52a abuts at its inner peripheral end against the lining plate 14 to bias the lining plate 14 towards the friction material 16. The conical spring part 52a may be processed to reduce (or adjust) its toughness, such as by forming slits 52c shown for example in Fig.14B. Otherwise, the present Example is similar to Example 1. It is observed that the formulation of Example 13 may also be applied to Examples 1, 3, 5, 7 and 10.

With Example 13, the advantages similar to those obtained with Example 1 may be obtained, while the number of the parts may be reduced as compared to Example 12 to further reduce the costs.

### [Example 14]

In the limiter unit of the conventional torque fluctuation absorber as shown in JP 2005-127507A, in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole bored in the lining plate, the adhesive may not be evenly pervaded in the through-hole, thus again raising the problem in connection with strength of the friction material.

According to a 47th aspect, in the torque fluctuation absorber according to the first aspect, preferably, there is further provided another friction material arranged on an opposite side to the friction material with respect to the second plate member and slidably pressed on the second plate member; and a resilient plate including a plate part and a resilient part. The plate part is rotatable in unison with the first plate member and pressed on the other friction material along a direction of rotation, and the resilient part biases the plate part towards the second plate member.

According to a 48th aspect, a torque fluctuation absorber includes a first plate member; a second plate member biased towards the first plate member and rotatable relative to the first plate member; a friction material arranged between the first and second plate members and pressed on the second member slidably along a direction of rotation of the second plate member, in which the friction material is engaged with the second plate member to prevent relative movement to the second plate member. Preferably, there are further provided another friction material arranged on an opposite side to the friction material with respect to the second plate member and slidably pressed on the second plate member; and a resilient plate rotatable in unison with the first plate member and having a plate part slidably pressed on the other friction material along the rotation direction and a resilient part for biasing the plate part towards the second plate member.

According to a 49th aspect, in the torque fluctuation absorber according to the 24th aspect, preferably, there are further provided another friction material arranged on an opposite side to the friction material with respect to the second plate member and slidably pressed on the second plate member; and a resilient plate rotatable in unison with the first plate member and having a plate part slidably pressed on the other friction material along the rotation direction and a resilient part for biasing the plate part towards the second plate member.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

An embodiment of a torque fluctuation absorber disclosed herein, or an embodiment (Example 14) of a torque fluctuation absorber according to the 47th to 49th aspects will now be described with reference to the drawings. Fig.14 is a radial partial cross-sectional view schematically showing the structure of a limiter unit of the torque fluctuation absorber according to Example 14.

In Example 1, the pressure plate (13 of Fig.1) and the friction material (15 of Fig.1) are thrust towards the lining plate (14 of Fig.1) under the bias of the conical spring (12 of Fig.1) carried by the support plate (10 of Fig.1). In Fig.14, a resilient plate 52, having the entire functions of the support plate, conical spring and the pressure plate, is used. The resilient plate 52 is placed at its outer peripheral part in contact with a cover plate 50, and the resulting set is secured to the flywheel (5 of Fig.1) by a bolt (equivalent to 9 of Fig.1). The resilient plate 52 has a conical spring part 52a at its mid portion, while having a plate part 52b at its inner peripheral portion. The conical spring part 52a biases the plate part 52b towards the lining plate 14. The conical spring part 52a may be processed to reduce (and adjust) its toughness, such as by forming slits 52c shown for example in Fig.14B. The plate part 52b is slidably pressed on the friction material 15 under the bias of the conical spring part 52a. Otherwise, the present Example is similar to Example 1. It is observed that the formulation of Examples 1, 3, 5, 7 and 10 may also be applied to

### Example 14.

With Example 14, the advantages similar to those obtained with Example 1 may be obtained, while the number of the parts may be reduced to further reduce the costs.

### [Example 15]

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 50th aspect, in the torque fluctuation absorber according to the first aspect, preferably, there are further provided the other friction material arranged on an opposite side to the friction material with respect to the second plate member and slidably pressed on the second plate member; with the other friction material having a hole(s), and a resilient plate having a plate part and a resilient part. The plate part is rotatable in unison with the first plate member and includes a protrusion(s) engaged in the hole(s), with the resilient part biasing the plate part towards the second plate.

According to a 51st aspect, a torque fluctuation absorber includes a first plate member; a second plate member biased towards the first plate member and rotatable relative to the first plate member; a friction material arranged between the first and second plate members and pressed on the second plate member slidably along a direction of rotation of the second plate member, the friction material being immovably engaged with the second plate member; the other friction material arranged on an opposite side to the friction material with respect to the second plate member and slidably pressed on the second plate member; with the other friction material having a hole(s); and a resilient plate having a plate part and a resilient part. The plate part is rotatable in unison with the first plate member and includes a protrusion(s) engaged in the hole(s), with the resilient part biasing the plate part towards the second plate.

According to a 52nd aspect, in the torque fluctuation absorber of the 24th aspect, preferably there are provided another friction material arranged on an opposite side to the friction material with respect to the second plate member and slidably pressed on the second plate member; with the other friction material having a hole(s), and a resilient plate having a plate part and a resilient part. The plate part is rotatable in unison with the first plate member and includes a protrusion(s) engaged in the hole(s), with the resilient part biasing the plate part towards the second plate.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

### [Example 15]

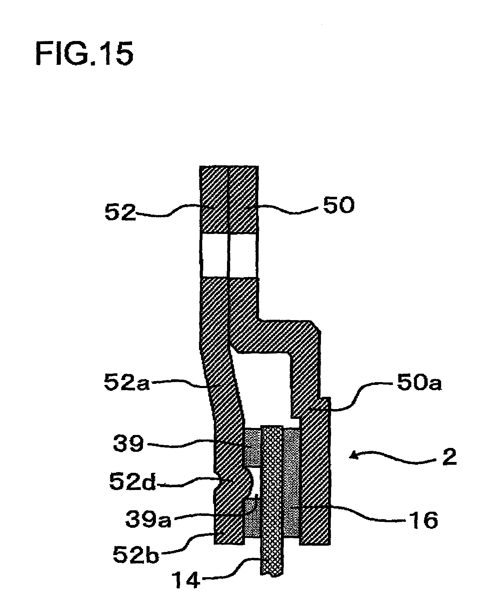

An embodiment of a torque fluctuation absorber disclosed herein, or an embodiment (Example 15) of a torque fluctuation absorber according to the 50th to 52nd aspects will now be described with reference to the drawings. Fig.15 is a radial partial cross-sectional view schematically showing the structure of a limiter unit of the torque fluctuation absorber according to Example 15.

Present Example 15 is similar to Example 14 (see Fig.14) except that the plate part 52b of the resilient plate 52 is formed with a plurality of protrusions 52d to prevent relative rotation between the resilient plate 52 and the friction material 39. In addition, the friction material 39 is formed with a hole 39a engaged by the protrusions 52d. Otherwise, the present Example is similar to Example 14. The number of the protrusions 52d can be singular or plural. Example 15 may be applied to Examples 1, 3, 5 and 7.

With Example 15, the advantages similar to those obtained with Example 14 may be obtained. In addition, since the relative rotation between the resilient plate 52 and the friction material 39 is prevented, the resilient plate 52 performs no sliding movement to render it possible to maintain the function of the resilient plate 52.

In the limiter unit of the conventional torque fluctuation absorber as shown in JP2005-127507A, in which the friction material is bonded or otherwise secured to the lining plate, the processing for bonding may be a time-consuming operation. Moreover, in case the friction material is bonded or otherwise secured to the lining plate, the adhesive may not be pervaded to the entire bonding surface, thus raising a problem in connection with strength of the friction material. In case the friction material is integrally molded via through-hole(s) bored in the lining plate, the adhesive may not be evenly pervaded in the through-hole(s), thus again raising the problem in connection with strength of the friction material.

According to a 53rd aspect, in the torque fluctuation absorber of the first aspect, burrs are formed on a surface of the first plate member or the second plate member opposing to the friction material, and the friction material engages the burrs, preferably.

### [Example 16]

According to a 54th aspect, a torque fluctuation absorber includes a first plate member; a second plate member biased towards the first plate member and rotatable relative to the first plate member; and a friction material arranged between the first and second plate members and pressed on the first plate member slidably along a direction of rotation of the second plate member, the friction material being immovably engaged with the second plate member, wherein burrs are formed on a surface of the first or the second plate member opposing to the friction material, and the friction material engages the burrs, preferably.

According to a 55th aspect, in the torque fluctuation absorber of the 24th aspect, burrs are formed on a surface of the first or second plate member opposing to the friction material, which engages burrs, preferably.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

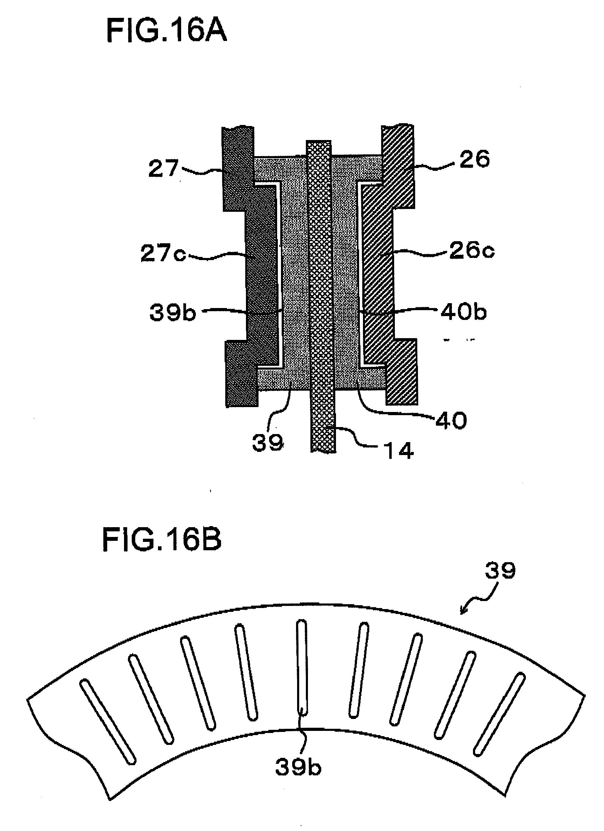

An embodiment of a torque fluctuation absorber disclosed herein, or an embodiment (Example 16) of a torque fluctuation absorber according to the 53rd to 55th aspects will now be described with reference to the drawings. Figs.16A and 16B are a radial partial cross-sectional view and a partial plan view, respectively, showing the structure of a limiter unit of the torque fluctuation absorber according to Example 16.

In Example 8, the protrusions (27c, 26c of Fig.8) of the pressure plate (27 of Fig.8) and the cover plate (26 of Fig.8) are engaged in the mating holes (39a, 40a of Fig.8) of the friction materials (39, 40 of Fig.8), whereby the friction material (39 of Fig.8) is retained by the pressure plate (27 of Fig.8) such as to inhibit relative rotation therebetween, while the friction material (40 of Fig.8) is retained by the pressure plate (26 of Fig.8) to prevent relative rotation therebetween. In Example 16, the protrusions 27c of the pressure plate 27 and the protrusions 26c of the cover plate 26 are axially protruded along a radial line (radial line segment). The recesses 39b of the friction material 39 and the recesses 40b of the friction material 40 are axially receded along a radial line (radial line segment) in a mating relationship to the protrusions 27c, 26c. The recesses 39b, 40b may also be grooves. The protrusions 27c, 26c are engaged or held in the mating recesses 39b, 40b to prevent relative movement, or to allow for relative movement within a preset distance but to prevent relative movement farther than the preset distance. A frictional coefficient elevating component may be molded or coated on the surfaces of the pressure plate 27 and the cover plate 26 abutting against the friction surfaces 39, 40. It is also possible to form high frictional coefficient parts of Example 7, such as 26b or 27b of Fig.7, by roughing (acid washing, shot peening or burring) the surfaces of the pressure plate 27 and the cover plate 26 abutting against the friction surfaces 39, 40. Otherwise, the present Example is similar to Example 8 (see Fig.8). Example 16 may be applied to Examples 1, 3, 5 and 7.

With the present Example 16, in which the protrusions 27c, 26c on the pressure plate 27 and the cover plate 26 are engaged in the recesses 39b, 40b of the friction materials 39, 40, it becomes unnecessary to secure the friction materials 15, 16 to other component parts with an adhesive or by fastening means, such as rivets. It is thus possible to reduce the cost and to assure strength of the friction materials 15, 16. Since the recesses 39b, 40b of the friction materials 39, 40 are receded axially along the radial line (line segment), it is possible to remove the effect of radial dimensional changes of the friction materials 39, 40. That is, given the property of the friction materials 39, 40 that they are susceptible to changes in the diameter as a result of molding, it is possible to avoid mismatch of the friction materials with the protrusions 27c, 26c brought about by such changes.

### [Example 17]

In the limiter unit of the conventional torque fluctuation absorber as shown in JP 2005-127507A, in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole bored in the lining plate, the adhesive may not be evenly pervaded in the through-hole, thus again raising the problem in connection with strength of the friction material.

According to a 56th aspect, in the torque fluctuation absorber of the third aspect, burrs are formed on a surface of the second or third plate member, opposing to the other friction material, which engages the burrs, preferably.

According to a 57th aspect, in the torque fluctuation absorber of the 14th aspect, burrs are formed on a surface of the second or third plate member, opposing to the other friction material, which engages the burrs, preferably.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

### [Example 17]

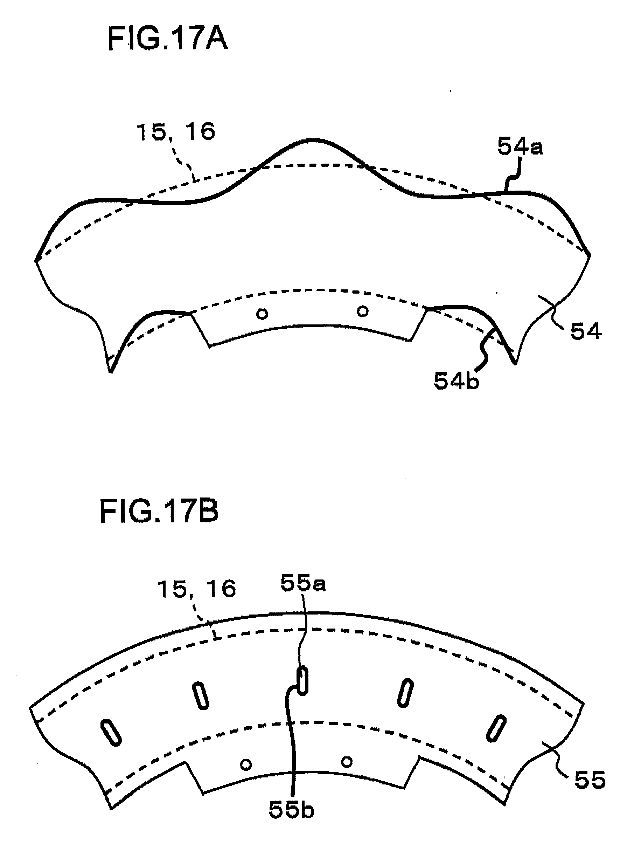

An embodiment of a torque fluctuation absorber disclosed herein, or an embodiment (Example 17) of the 56th and 57th aspects of a torque fluctuation absorber will now be described with reference to the drawings. Figs.17A and 17B are radial partial plan views schematically showing the structure of a limiter unit of the torque fluctuation absorber according to Example 17. Specifically, Figs.17A and 17B show a first instance and a second instance of the limiter unit structure.

In Example 1, simply the friction materials (15 and 16 of Fig.1) are slidably frictionally engaged with the lining plate (14 of Fig.1). In Example 17, the outer or inner peripheral surface of a lining plate 54 is corrugated (in a wavy profile). During press working or cutting, lengths of (or contingent) burrs 54a, 54b are formed at angular corners on the outer or inner peripheral surface of the lining plate 54. The friction materials 15, 16 are arranged so as to be overlapped with these elongated burrs so that the burrs 54a, 54b are engaged with the friction materials 15, 16, whereby the lining plate 54 is engaged with the friction materials 15, 16 so that the lining plate is non-movable with respect to the friction materials (see Fig.17A). Otherwise, the present Example is similar to Example 1. It is observed that an elongated burr 55b may be formed at a rim of the hole 55a in the lining plate 54, when the holes 55a are being bored, as shown in Fig.17B. Such burr may be useful for producing the state of engagement in addition to using the burrs 54a, 54b on the outer or inner peripheral surface of the lining late 54 engaging with the friction materials 15, 16, as shown in Fig.17A. By so doing, the lining plate 55 may be engaged with the friction materials 15, 16 to prevent relative movement between the lining plate and the friction materials. The engagement by burrs may be applied not only to the engagement between the lining plate and the friction materials but also to that between the cover plate 11 and the friction materials 16 in Example 1, or to that between the cover plate 26 and the friction material 32 in Example 3, or to that between the pressure plate 13 and the friction materials 15 in Example 1, or to that between the pressure plate 27 and the friction material 31 in Example 3.

In Example 17, in which the burrs 54a, 54b of the lining plate 54 are engaged with the friction materials 15, 16, there is no necessity of securing the friction materials 15, 16 to other parts with an adhesive or by fastening means, such as rivets. It is thus possible to reduce the cost and assure strength of the friction materials 15, 16.

### [Example 18]

In the limiter unit of the conventional torque fluctuation absorber as shown in JP 2005-127507A, in which the friction material is bonded or otherwise secured to the lining plate, the processing for bonding may be a time-consuming operation and increase the cost. Moreover, in case the friction material is bonded or otherwise secured to the lining plate, the adhesive may not be pervaded to the entire bonding surface, thus raising a problem in connection with strength of the friction material. In case the friction material is integrally molded via through-hole bored in the lining plate, the adhesive may not be evenly pervaded in the through-hole, thus again raising the problem in connection with strength of the friction material.

According to a 58th aspect, in the torque fluctuation absorber of the first aspect, the first or second plate member includes a taper-shaped extension(s) on a surface opposing to the friction material, which engages the extension(s), preferably.

According to a 59th aspect, in the torque fluctuation absorber of the 24th aspect, the first or second plate member includes a taper-shaped extension(s) on a surface facing the friction material, which engages the extension(s), preferably.

According to a 60th aspect, in the torque fluctuation absorber of the 58th aspect, the first or second plate member has a recess(es), in which the extension has a height, in the direction toward the rotation center line (axis) of the second plate member, larger than a depth of the recess.

According to a 61st aspect, in the torque fluctuation absorber of the 59th aspect, the first and second plate members, respectively include a recess(es), the extension(s) has a height in the rotation axis (center line) of the second plate member larger than a depth of the recess(es), preferably.

According to a 62nd aspect, in the torque fluctuation absorber of the third aspect, the second or third plate member has an extension(s) taper-shaped cross-section on a surface facing the center friction material, which engages the extension(s), preferably.

According to a 63rd aspect, in the torque fluctuation absorber of the 14th aspect, the second or third plate member has an extension(s) taper-shaped cross-section on a surface facing the center friction material, which engages the extension(s), preferably.

According to a 64th aspect, in the torque fluctuation absorber of the 62nd aspect, the second or third plate member includes a recess(es) having a depth smaller than a height of the extension(s) in a direction of rotation axis of the second plate member.

According to a 65th aspect, in the torque fluctuation absorber of the 63rd aspect, the second or third plate member includes a recess(es) having a depth smaller than a height of the extension(s) in a direction of rotation axis of the second plate member.

According to above formulation, the radial offsetting of the friction material is suppressed, which obviates the need of securing the friction material to the other member by bonding with adhesive, reduces cost, and secures the strength of the friction material. Also, reduction in cost is achieved by reduction in the number of parts.

### [Example 18]

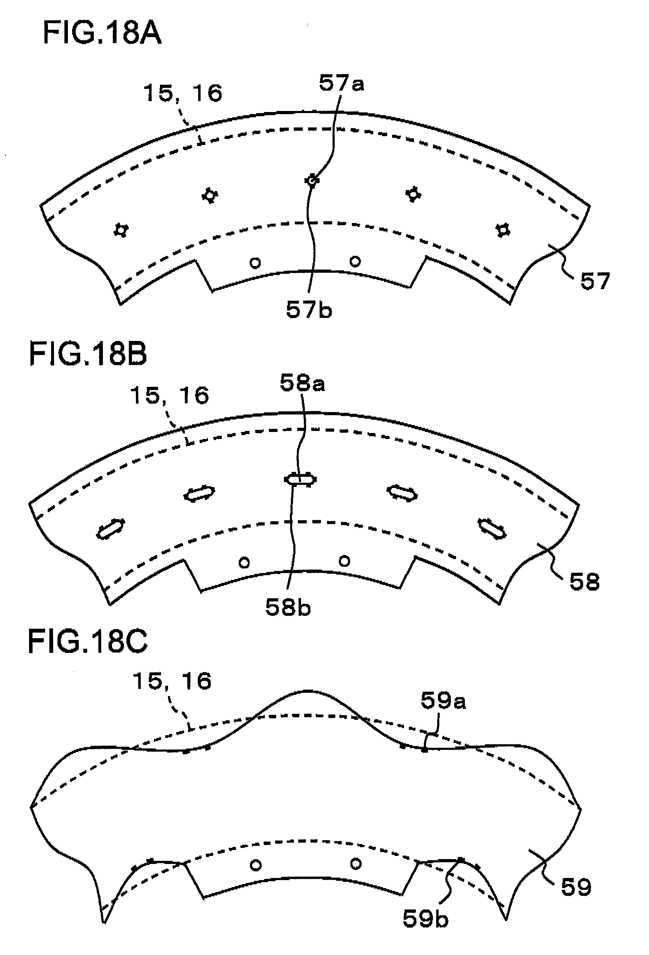

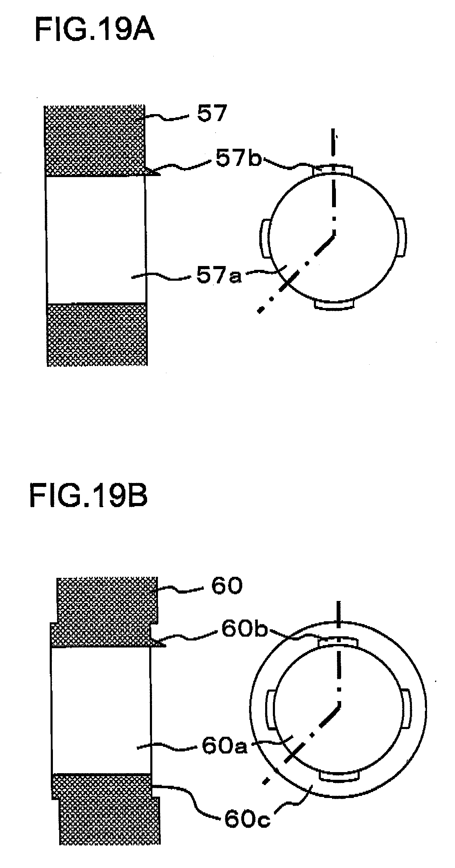

An embodiment of torque fluctuation absorber disclosed herein, or an embodiment (Example 18) of a torque fluctuation absorber according to the 58th to 65th aspects will now be described with reference to the drawings. Figs.18A, 18B and 18C depict partial plan views schematically showing the structure of a limiter unit of the torque fluctuation absorber according to Example 18 of the present invention. Specifically, Figs.18A, 18B and 18C show a first instance, a second instance and a third instance of the limiter unit structure, respectively. Figs.19A, Figs.19B depict partial plan/ partial cross-sectional views, schematically showing the structure of an extended portion of a plate of a limiter unit of the torque fluctuation absorber according to Example 18 of the present invention. Specifically, Figs.19A, 19B show a first instance and a fourth instance of the extended portion.

In Example 17, the lengths of (contingent) burrs (54a, 54b of Fig.17) of the lining plate (54 of Fig.17) are engaged with the friction materials (15, 16 of Fig.17) to cause the engagement between the lining plate (54 of Fig.17) and the friction materials (15, 16 of Fig.17) to prevent relative movement therebetween. In Example 18, a series of intermittent, that is, non-continuous, extensions 57b of tapered cross-sections are formed on a rim of a hole 57a which is being formed by press working in the lining plate 57. These extensions 57b are engaged with the friction materials 15, 16 for causing the engagement between the lining plate 57 and the friction materials 15, 16 to prevent relative movement therebetween (see Figs.18A and 19A). Otherwise, the present Example is similar to Example 1.

Meanwhile, the shape of the hole 57a is not limited to the circular shape, as indicated in Fig.18A. If the shape of a hole 58a is elliptical, as shown in Fig.18B, the number of extensions 58b may be increased. The extensions 57b need not necessarily be formed on the rim of the hole 57a, as shown in Fig.18A, and extensions such as those shown at 59a, 59b may also be formed on the rim of the outer or inner peripheral part (severed edge) as shown in Fig.18C. The height of the extension 57b need not be limited to the height from the plate surface of the lining plate 57. The height of an extension 60b may thus be adjusted by forming a stepped recess 60c around a hole 60a, as shown in Fig.19B. In this case, the depth of the stepped recess 60c is set so as to be smaller than the height of the extension 60b in the axial direction of the lining plate 57. Such engagement by the extension 57b, 60b may be applied not only for the engagement between the lining plate 57, 60 and the friction material 15, 16, but also for engagement between the cover plate 11 and the friction materials 16 in Example 1, or that between the cover plate 26 and the friction material 32 in Example 3, or that between the pressure plate 13 and the friction material 15 in Example 1, or that between the pressure plate 27 and the friction materials 31 in Example 3.

In Example 18, in which the extension 57b of the lining plate 57 is engaged with the friction materials 15, 16, it is unnecessary to secure the friction materials 15, 16 to other component parts with an adhesive or by fastening means, such as rivets, thus reducing the cost and assuring the strength of the friction materials 15, 16.

The particular exemplary embodiments or examples may be modified or adjusted within the gamut of the entire disclosure of the present invention, inclusive of claims, based on the fundamental technical concept of the invention. Further, variegated combinations or selection of elements disclosed herein may be made within the framework of the claims. That is, the present invention may encompass various modifications or corrections that may occur to those skilled in the art in accordance with and within the gamut of the entire disclosure of the present invention, inclusive of claim and the technical concept of the present invention.

### [Explanation of Symbols]

- 1: torque fluctuation absorber
- 2: limiter unit
- 3: damper unit
- 4: hysteresis unit
- 5: flywheel
- 6: engine side rotational shaft
- 7: speed change gear side rotational shaft
- 8: speed change gear side rotational shaft
- 8, 9: bolts
- 10: support plate (support member)
- 11: cover plate (first plate member)
- 11a: hole
- 11b: guide part
- 12: conical spring (resilient member)
- 13: pressure plate (third plate member)
- 13a: protrusion
- 13b: guide part (other guide part)
- 14: lining plate (second plate member)
- 14a: coated part
- 15: friction material (other friction material)
- 16: friction material
- 17: first side plate
- 17a: window
- 18: second side plate
- 18a: window
- 19: rivet
- 20: coil spring
- 21: seat member
- 22: first thrust member
- 23: second thrust member
- 24: conical spring
- 25: hub member
- 25a: hub part
- 25b: flange part
- 25c: window
- 26: cover plate (first plate member)
- 26a: hole
- 26b: high frictional coefficient part
- 26c: protrusion
- 27: pressure plate (third plate member)
- 27a: protrusion
- 27b: high frictional coefficient part
- 27c: protrusion (second protrusion)
- 28: lining plate (second plate member)
- 28a: guide part (other guide part)
- 28b: guide part
- 30: lining plate (second plate member)
- 30a: hole (other hole)
- 30b: hole
- 31: friction material (other friction material)
- 31a: protrusion (other protrusion)
- 32: friction material
- 32a: protrusion
- 34: lining plate (second plate member)
- 34a: hole
- 34b: outer peripheral protrusion (protrusion)
- 34c: inner peripheral protrusion (protrusion)
- 34d: connection part
- 35: friction material
- 37: friction plate 37 (second plate member)
- 39: friction material (other friction material)
- 39a: hole (other hole)
- 39b: recess
- 40: friction material
- 40a: hole
- 40b: recess
- 42: friction material (other friction material)
- 42a: hole for riveting
- 43: friction material
- 43a: hole for riveting
- 44: rivet (other rivet)
- 45: rivet
- 47: first side plate (second plate member)
- 47a: outer peripheral extension
- 47b: hole
- 48: friction material
- 50: cover plate (first plate member)
- 50a: guide part
- 52: resilient plate
- 52a: conical spring (resilient part)
- 52b: plate part
- 52c: slit part (slit)
- 52d: protrusion
- 54: lining plate
- 54a, 54b: burrs
- 55: lining plate
- 55a: hole
- 55b: burrs
- 57: lining plate
- 57a: hole
- 57b: extension
- 58: lining plate
- 58a: hole
- 58b: extension
- 59: lining plate
- 59a, 59b: extensions
- 60: plate
- 60a: hole
- 60b: extension
- 60c: stepped recess
Disclosed is a torque fluctuation absorber comprising: a first plate member 11; a second plate member 14 biased towards the first plate member 11 and rotatable relative to the first plate member 11; and a friction material 16 arranged between the first plate member 11 and the second plate member 14 and pressed on the second plate member 14 slidably along a direction of rotation of the second plate member 14; the friction material 16 engaging with the first plate member 11 to prevent relative movement to the first plate member 11 or to be movable relative to the first plate member 11 within a preset distance but to prevent further movement than the preset distance.

## Claims

1. A torque fluctuation absorber comprising:
a first plate member;
a second plate member biased towards the first plate member and rotatable relative to the first plate member; and
a friction material arranged between the first and second plate members and pressed on the second plate member slidably along a direction of rotation of the second plate member;
the friction material engaging with the first plate member to prevent relative movement to the first plate member or to be movable relative to the first plate member within a preset distance but to prevent further movement than the preset distance.

2. The torque fluctuation absorber according to claim 1, wherein
a frictional coefficient of slide surfaces between the first plate member and the friction material is higher than a frictional coefficient of slide surfaces between the second plate member and the friction material.

3. The torque fluctuation absorber according to claim 1, wherein
the friction material has a hole(s) or a recess(es); and
the first plate member has a protrusion engaged in the hole(s) or recess(es).

4. The torque fluctuation absorber according to claim 1 or 2, further comprising:
a support member rotatable in unison with the first plate member;
a third plate member arranged between the second plate member and the support member;
a resilient member arranged between the support member and the third plate member and adapted for biasing the third plate member towards the second plate member; and
the other friction material arranged between the second and third plate members and pressed on the second plate member slidably along a direction of rotation of the second plate member;
the other friction material engaging with the third plate member to prevent relative to the third plate member, or to be movable relative to the third plate member within a preset distance but to prevent further movement than the preset distance.

5. The torque fluctuation absorber according to claim 4, wherein
a frictional coefficient of sliding surfaces between the third plate member and the another friction material is higher than a frictional coefficient between sliding surfaces of the second plate member and the other friction material.

6. The torque fluctuation absorber according to claim 4, wherein
the another friction material has a hole(s) or a recess(es); and wherein
the third plate member has a protrusion(s) engaged in the hole(s) or recess(es).

7. The torque fluctuation absorber according to any one of claims 1 to 6, wherein
a material less prone to rusting than iron, a surface processed material or a thermally processed material is used for forming the second plate member.

8. The torque fluctuation absorber according to claim 7, wherein
stainless steel is used for forming the second plate member, and
a surface of the second plate member in contact with the other friction material is processed with roughing.

9. The torque fluctuation absorber according to any one of claims 1 to 8, wherein
the second plate member has an outer diameter smaller than an outer diameter of the first plate member.

10. The torque fluctuation absorber according to any one of claims 1 to 9, wherein
the second plate member simultaneously serves as a component part of the damper unit.

11. The torque fluctuation absorber according to claim 1, further comprising:
a resilient plate rotatable integrally with the first plate member and including a resilient part that biases the second plate member towards the first plate member.

12. The torque fluctuation absorber according to claim 1, wherein
burrs are formed on a surface of the first plate member or on a surface of the second plate member facing the friction material;
the other friction material engaging with the burrs.

13. The torque fluctuation absorber according to claim 4, wherein.
burrs are formed on a surface of the second plate member or on a surface of the third plate member facing the other friction material;
the other friction material engaging with the burrs.

14. The torque fluctuation absorber according to claim 1, wherein
an extension of a tapered cross-sectional shape is formed on a surface of the first plate member or the second plate member facing the friction material;
the friction material engaging with the extension.

15. The torque fluctuation absorber according to claim 4, wherein
an extension of a tapered cross-sectional shape is formed on a surface of the second plate member or the third plate member facing the other friction material;
the other friction material engaging with the extension.
